(19)

**Europäisches Patentamt**
**European Patent Office**
**Office européen des brevets**

(11) **EP 4 024 498 B1**

(12) **EUROPEAN PATENT SPECIFICATION**

(45) Date of publication and mention
of the grant of the patent:
**11.02.2026  Bulletin 2026/07**

(21) Application number: **21218366.9**

(22) Date of filing: **30.12.2021**

(51) International Patent Classification (IPC):
$H01M\ 4/04^{(2006.01)}$       $H01M\ 4/139^{(2010.01)}$
$H01M\ 4/62^{(2006.01)}$       $H01M\ 4/66^{(2006.01)}$
$H01M\ 10/052^{(2010.01)}$

(52) Cooperative Patent Classification (CPC):
**H01M 4/0404; H01M 4/043; H01M 4/139;**
**H01M 4/622; H01M 4/667; H01M 10/052;**
H01M 4/625; Y02E 60/10

(54) **ELECTRODE, LITHIUM BATTERY INCLUDING THE SAME, AND METHOD OF MANUFACTURING THE ELECTRODE**

ELEKTRODE, LITHIUMBATTERIE DAMIT UND VERFAHREN ZUR HERSTELLUNG DER ELEKTRODE

ÉLECTRODE, BATTERIE AU LITHIUM LA COMPRENANT ET PROCÉDÉ DE FABRICATION DE L'ÉLECTRODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2020  KR 20200188064**

(43) Date of publication of application:
**06.07.2022  Bulletin 2022/27**

(73) Proprietor: **Samsung SDI Co., Ltd.**
**Yongin-si, Gyeonggi-do 17084 (KR)**

(72) Inventors:
• **LEE, Jinhyon**
  **Yongin-si, 17084 (KR)**
• **KWON, Ilkyong**
  **Yongin-si, 17084 (KR)**
• **NAM, Junghyun**
  **Yongin-si, 17084 (KR)**
• **NAM, Hyun**
  **Yongin-si, 17084 (KR)**
• **LEE, Donggeun**
  **Yongin-si, 17084 (KR)**

(74) Representative: **Marks & Clerk LLP**
**15 Fetter Lane**
**London EC4A 1BW (GB)**

(56) References cited:
**EP-A1- 3 300 145       WO-A1-2017/197299**
**US-A1- 2020 028 156     US-A1- 2020 227 723**

• **BONGKI SON ET AL: "Measurement and Analysis of Adhesion Property of Lithium-Ion Battery Electrodes with SAICAS", APPLIED MATERIALS & INTERFACES, vol. 6, no. 1, 8 January 2014 (2014-01-08), US, pages 526 - 531, XP055359994, ISSN: 1944-8244, DOI: 10.1021/ am404580f**
• **JAECHEOL CHOI ET AL: "Highly Adhesive and Soluble Copolyimide Binder: Improving the Long-Term Cycle Life of Silicon Anodes in Lithium-Ion Batteries", APPLIED MATERIALS & INTERFACES, vol. 7, no. 27, 15 July 2015 (2015-07-15), US, pages 14851 - 14858, XP055673338, ISSN: 1944-8244, DOI: 10.1021/ acsami.5b03364**

## Description

## BACKGROUND

### 1. Field

One or more aspects of embodiments of the present disclosure relate to a method of manufacturing an electrode.

### 2. Description of the Related Art

In order to meet the miniaturization and high performance requirements of various devices, energy density, in addition to miniaturization and weight reduction of lithium batteries, is becoming more important. In other words, high-capacity lithium batteries are becoming important.

In order to implement a lithium battery suitable for the uses described above, an electrode having a high loading has been studied.

In a related art electrode with a high loading, the distribution of constituents within the electrode is non-uniform and the density near the electrode surface is increased. The performance of a lithium battery utilizing such an electrode is deteriorated.

An electrode capable of preventing or reducing deterioration of lithium battery performance (e.g., a high-capacity electrode capable of sustaining suitable lithium battery performance) is desired.

US-A-2020/0028156 discloses a method for preparing an electrode, the method comprising, compressing an electrode dry mixture to form an electrode film of an electrode material, the electrode dry mixture comprising an active material and an electrolyte material.

WO-A-2017/197299 discloses a process for forming an electrode including, combining a processing additive and an active electrode material or fibrillizable binder to form an electrode precursor material, where the processing additive has a surface roughness and a porosity and intermixing the electrode precursor material. The electrode precursor material may then be combined with the fibrillizable binder or the active electrode material and the fibrillizable binder or the active electrode material is intermixed with the electrode precursor material to form an electrode film material. The electrode film material includes the processing additive, the fibrillizable binder and the active electrode material. The electrode film material is then compressed into an electrode film.

US-A-2020/227723 discloses an energy storage device including a cathode, an anode, and a separator between the cathode and the anode. At least one of the electrodes can include an electrode film prepared by a dry process. The electrode film and/or the electrode can comprise a prelithiating material.

## SUMMARY

The invention provides a method of manufacturing an electrode as claimed in claim 1.

## BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 shows a surface and interfacial cutting analysis system (SAICAS) graph for the cathode prepared according to Example 1 and Comparative Example 1;
FIG. 2 shows a scanning electron microscope (SEM) image of the cross-section of the cathode prepared according to Example 1;
FIG. 3 shows a scanning electron microscope image of the cross-section of the cathode prepared according to Comparative Example 1;
FIG. 4 shows a cross-sectional view of an electrode;
FIG. 5 shows a cross-sectional view of an electrode;
FIG. 6 shows a schematic perspective view of an electrode;
FIGS. 7A-7F show plan views of an electrode;
FIG. 8 shows a cross-sectional view of an electrode according to an;
FIG. 9 shows a side view of an electrode assembly;
FIG. 10 shows a side view of an electrode assembly;
FIG. 11 shows a front view of an electrode assembly; and
FIG. 12 shows a schematic diagram of a lithium.

## DETAILED DESCRIPTION

The term "dry" refers to a state in which something (e.g., the referenced component) does not intentionally contact (e.g., is not intentionally in contact with) a solvent (such as a process solvent), and/or a state in which something does not intentionally include a solvent. For example, a "dry conductive material" refers to a conductive material that does not intentionally contact a solvent or a conductive material that does not intentionally contain a solvent. For example, a "dry binder" refers to a binder that does not intentionally contact a solvent or a binder that does not intentionally contain a solvent. For example, a binder that is in a liquid state at room temperature without being mixed with a solvent, is a dry binder.

Hereinafter, an electrode, a lithium battery including the same, and a manufacturing method thereof will be described in more detail.

An electrode includes: an electrode active material layer including an electrode active material and a binder; an electrode current collector disposed on one surface of the electrode active material layer or between opposite surfaces thereof (e.g., in the interior or depth-wise center of the electrode active material layer); and an interlayer disposed between the electrode active material layer and the electrode current collector, wherein, when the electrode active material layer is measured (characterized) by a surface and interfacial cutting analysis system (SAICAS), the ratio (e.g., percentage) of change of a vertical relative force ($F_{VR}$) between a first point, which is 5% away from the surface of the electrode active material layer facing away from the electrode current collector, to a second point, which is 5% away from the surface of the electrode current collector, with respect to the total thickness of the electrode active material layer, is 300% or less. The ratio of change of the vertical relative force may be, for example, about 10% to about 300%, about 10% to about 250%, about 10% to about 200%, about 10% to about 150%, about 10% to about 100%, or about 10% to about 50%. The second point, which is 5% away from the surface of the electrode current collector (e.g., along a vector from the surface of the electrode current collector through the electrode active material layer), may be a point that is 95% away from the surface of the electrode active material layer opposite the electrode current collector (e.g., 95% of the way along a vector from the surface of the electrode active material layer to the electrode current collector), with respect to the total thickness of the electrode active material layer. The vertical relative force may be calculated from Equation 1. The SAICAS measurement method refers to Evaluation Example 1, for example.

Ratio of change of vertical relative force ($F_{VR}$) = [(maximum value of vertical relative force ($F_{VR1}$) - minimum value of vertical relative force ($F_{VR1}$))/minimum value of vertical relative force ($F_{VR1}$)] × 100%    Equation 1

In relation to the electrode, when the ratio of change of the vertical relative force in the vertical direction is 300% or less as measured by SAICAS, the uniformity of the distribution of the components in the electrode is improved. In addition, because a side reaction(s) and an increase in internal resistance due to non-uniform distribution of components in the electrode active material layer are suppressed or reduced, the reversibility of the electrode reaction(s) (e.g., intercalation and deintercalation) may be improved. Even in the case of an electrode having a high loading, the cycle life characteristics of the lithium battery may be improved. In addition, because the electrode includes the interlayer, the force between the electrode active material layer and the electrode current collector is further improved, and the internal resistance of the electrode is reduced. Accordingly, the cycle life characteristics of a lithium battery utilizing such an electrode may be improved.

When the electrode is measured by SAICAS, a horizontal force ratio (e.g., percentage) of a second horizontal force ($F_{H2}$) at a second point, which is 10% away from the surface of the electrode current collector facing away from the electrode current collector, with respect to a first horizontal force ($F_{H1}$) at a first point, which is 10% away from the surface of the electrode current collector, where the first point and the second point positions are given with respect to the depth (distance) from the surface of the electrode active material layer to the surface of the electrode current collector, may be 50% or more. The horizontal force ratio may be, for example, 50% to 100%, 60% to 100%, 70% to 100%, 80% to 100%, or 90% to 100%. The second point, which is 10% away from the surface of the electrode current collector r, may be 90% away from the surface of the electrode active material layer along a vector from the surface of the electrode active material layer to the electrode current collector, and/or with respect to the total thickness of the electrode active material layer. The horizontal force ratio may be, for example, represented by Equation 2:

### Equation 2

Horizontal force ratio = [second horizontal force ($F_{H2}$) / first horizontal force ($F_{H1}$)] × 100%

When the horizontal force ratio as measured by SAICAS is 50% or more, the uniformity of the distribution of components in the electrode may be further improved. When the electrode has a horizontal force ratio within this range, the cycle life characteristics of a lithium battery utilizing such an electrode may be further improved.

The electrode current collector may have a reduced surface roughness compared to an electrode current collector in an electrode of the related art. Because the surface of the electrode current collector has a reduced surface roughness, the electrode current collector may form (a) substantially uniform interface(s) with the electrode active material layer and/or the interlayer. As a result, local side reactions and/or non-uniform electrode reactions at the interface between the electrode current collector and other layers may be suppressed or reduced, and cycle life characteristics of a lithium battery including such an electrode may be improved.

The maximum roughness depth ($R_{max}$) of the surface of the electrode current collector may be, for example, 3 $\mu$m or less, 2 $\mu$m or less, 1 $\mu$m or less, 0.5 $\mu$m or less, or 0.1 $\mu$m or less. The maximum roughness depth ($R_{max}$) of the surface of the electrode current collector may be, for example, 10 nm to 3 $\mu$m, 10 nm to 2 $\mu$m, 10 nm to 1 $\mu$m, 10 nm to 0.5 $\mu$m, or 10 nm to 0.1 $\mu$m.

The mean roughness ($R_a$) of the surface of the electrode current collector may be, for example, 2 $\mu$m or less, 1 $\mu$m or less, 0.5 $\mu$m or less, or 0.1 $\mu$m or less. The mean roughness ($R_a$) of the surface of the electrode current collector may be, for example, 10 nm to 2 $\mu$m, 10 nm to 1 $\mu$m, 10 nm to 0.5 $\mu$m, or 10 nm to 0.1 $\mu$m.

The root mean square (RMS) roughness ($R_q$) of the surface of the electrode current collector may be, for example, 2 $\mu$m or less, 1 $\mu$m or less, 0.5 $\mu$m or less, or 0.1 $\mu$m or less. The root mean square roughness ($R_q$) of the surface of the electrode current collector may be, for example, 10 nm to 2 $\mu$m, 10 nm to 1 $\mu$m, 10 nm to 0.5 $\mu$m, or 10 nm to 0.1 $\mu$m.

The material constituting the electrode current collector may be any material that does not react with lithium, for example, a material that does not form an alloy or compound with lithium and has conductivity (e.g., is a conductor). The electrode current collector may be or include, for example, a metal or an alloy. The electrode current collector may be or include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

The electrode current collector may have a form selected from, for example, a sheet, a foil, a film, a plate, a porous body, a mesoporous body, a through-hole containing body, a polygonal ring body, a mesh body, a foam body, and a nonwoven body. However, the form thereof is not limited thereto and may be any form utilized in the art.

The electrode current collector may have a thickness that is reduced (e.g. is a relatively thin film) compared to an electrode current collector in an electrode of the related art. Accordingly, due to the inclusion of a thin-film current collector, the electrode is distinguished from thick-film current collector electrodes of the related art. Because an electrode includes a thin film current collector having a reduced thickness, the relative thickness of the electrode active material layer may be increased. As a result, the energy density of a lithium battery including such an electrode may be increased. The thickness of the electrode current collector may be, for example, less than 15 $\mu$m, 14.5 $\mu$m or less, or 14 $\mu$m or less. The thickness of the electrode current collector may be, for example, 0.1 $\mu$m to less than 15 $\mu$m (e.g., 0.1 $\mu$m to 14.9 $\mu$m), 1 $\mu$m to 14.5 $\mu$m, 2 $\mu$m to 14 $\mu$m, 3 $\mu$m to 14 $\mu$m, 5 $\mu$m to 14 $\mu$m, or 10 $\mu$m to 14 $\mu$m.

The binder included in the electrode active material layer may be, for example, a dry binder. The term "dry binder" refers to, for example, a binder that is not impregnated with, dissolved in, or dispersed in a solvent. A dry binder is, for example, a binder that does not include a solvent or is not in contact with a solvent.

The dry binder may be or include, for example, a fibrillized (e.g., fibrillated) binder. The fibrillized binder may act as a matrix that supports and binds the electrode active material and other components included in the electrode active material layer. It can be confirmed that the fibrillized binder has a fibrous shape, for example, by utilizing a scanning electron microscope (SEM) image of the cross-section of the electrode. The fibrillized binder may have, for example, an aspect ratio of 10 or more, 20 or more, 50 or more, or 100 or more.

The dry binder may be or include, for example, polytetrafluoroethylene (PTFE), a polyvinylidene fluoride-hexapropylene (PVDF-HFP) copolymer, polyvinylidene fluoride (PVDF), polyvinyl alcohol, polyacrylonitrile, carboxymethylcellulose (CMC), starch, hydroxypropylcellulose, cellulose, polyvinylpyrrolidone, polyethylene, polypropylene, ethylenepropylene-diene polymer (EPDM), sulfonated-EPDM, styrene butadiene rubber (SBR), fluororubber, or a copolymer of any of these, but is not limited thereto, and any suitable binder for manufacturing a dry electrode may be utilized. The dry binder may be or include a fluorine-based binder. The fluorine-based binder may be or include, for example, polytetrafluoroethylene (PTFE), polyvinylidenefluoride-hexapropylene (PVDF-HFP) copolymer, and/or polyvinylidene fluoride (PVDF).

The amount of the dry binder included in the electrode active material layer may be, for example, 1 wt% to 10 wt%, or 1 wt% to 5 wt%, based on the total weight of the electrode active material layer. When the electrode active material layer contains the dry binder in this range, its binding force with respect to the electrode may be improved, and a high energy density of the electrode may be maintained.

The electrode active material layer may further include, for example, a conductive material. The conductive material may be or include, for example, a dry conductive material. The term "dry conductive material" refers to, for example, a conductive material that is not impregnated with, dissolved in, or dispersed in a solvent. A dry conductive material is, for example, a conductive material that does not include a solvent or is not in contact with a solvent. The dry conductive material includes, for example, a carbon-based conductive material. The carbon-based conductive material may be or include carbon black, graphite fine particles, natural graphite, artificial graphite, acetylene black, Ketjen black, carbon fiber, or carbon nanotubes, but is not limited thereto, and may be any suitable carbon-based conductive material utilized in the art.

The amount of the dry conductive material included in the electrode active material layer may be, for example, 1 wt% to 10 wt%, or 1 wt% to 5 wt%, based on the total weight of the electrode active material layer. When the electrode active material layer contains these ranges of the dry conductive material, the conductive force (e.g., conductivity) of the electrode may be improved, and a high energy density of the electrode may be maintained.

The electrode active material layer may be, for example, a self-standing film. The electrode active material layer, for example, may maintain a film shape without a support. For example, the electrode active material layer may be prepared as a separate self-standing film and then placed on the electrode current collector. Because the electrode active material layer is manufactured in a dry process, a process solvent (which may be intentionally added in the related art) may not be added or included therein. For example, a residual processing solvent may not be included (e.g., processing solvents may be excluded). Unintentional traces (e.g., trace amounts) of solvents may remain in the electrode active material layer, but such trace solvents are not equivalent to intentionally added process solvents. Therefore, the electrode active material layer is distinguished from a wet electrode active material layer that is prepared by mixing components and a process solvent and then removing some or all of the process solvent by drying.

An interlayer may be disposed directly on one or both sides (plan view surfaces) of the electrode current collector. Therefore, another layer may not be required to be disposed between the electrode current collector and the interlayer. Because the interlayer is directly disposed on one or on both surfaces (e.g., the plan view surfaces oppositely facing away from each other) of the electrode current collector, the binding force between the electrode current collector and the electrode active material layer may be further improved.

The thickness (e.g., total thickness) of the interlayer may be, for example, 0.01% to 30%, 0.1% to 30%, 0.5% to 30%, 1% to 25%, 1% to 20%, 1% to 15%, 1% to 10%, 1% to 5%, or 1 to 3% of the total thickness of the electrode current collector. The thickness (e.g., total thickness) of the interlayer may be, for example, 10 nm to 5 $\mu$m, 50 nm to 5 $\mu$m, 200 nm to 4 $\mu$m, 500 nm to 3 $\mu$m, 500 nm to 2 $\mu$m, 500 nm to 1.5 $\mu$m, or 700 nm to 1.3 $\mu$m. When the interlayer thickness is within these ranges, the binding force between the electrode current collector and the electrode active material layer may be further improved, and an increase in the interfacial resistance may be suppressed or reduced.

The interlayer may include, for example, a binder. Due to the inclusion of the binder in the interlayer, the binding force between the electrode current collector and the electrode active material layer may be further improved. The binder included in the interlayer may be or include, for example, a conductive binder and/or a non-conductive binder.

The conductive binder may be, for example, an ionically conductive binder, and/or an electronically conductive binder. The binder having both (e.g., simultaneously) ionically conductive and electronically conductive properties may be classified as both an ionically conductive binder and an electronically conductive binder (e.g., simultaneously).

The ionically conductive binder may be or include, for example, polystyrene sulfonate (PSS), polyvinylidene fluoride-hexafluoropropylene copolymer (PVDF-HFP), polyvinyl fluoride (PVF), poly vinylidene fluoride (PVDF), polymethyl methacrylate (PMMA), polyethylene oxide (PEO), polyethylene glycol (PEG), polyacrylonitrile (PAN), polytetrafluoroethylene (PTFE), polyethylene dioxythiophene (PEDOT), polypyrrole (PPY), polyacrylonitrile (PAN), polyaniline, and/or polyacetylene. The ionically conductive binder may include a polar functional group. An ionically conductive binder containing a polar functional group may be or include, for example, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone), (SPAEK), poly[bis(benzimidazobenzisoquinolinones)] (SPBIBI), poly(styrene sulfonate) (PSS), and/or lithium 9,10-diphenylanthracene-2-sulfonate (DPASLi$^+$). The electronically conductive binder may be or include, for example, polyacetylene, polythiophene, polypyrrole, poly(p-phenylene), poly(phenylenevinylene), poly(phenylene sulfide), and/or polyaniline. The interlayer may be, for example, a conductive layer including a conductive polymer.

The binder included in the interlayer may be selected from the same binders that may be included in the electrode active material layer. The binder of the interlayer may be the same as the binder of the electrode active material layer (e.g., may be included in both layers). The binder included in the interlayer may be, for example, a fluorine-based binder. The fluorine-based binder contained in the interlayer may be, for example, polyvinylidene fluoride (PVDF). The interlayer may be formed or placed on the electrode current collector by, for example, a dry method or a wet method. The interlayer may be, for example, a binding layer including a binder.

The interlayer may include, for example, a carbon-based conductive material. The carbon-based conductive material included in the interlayer may be selected from the same carbon-based conductive materials that may be included in the electrode active material layer. The carbon-based conductive material of the interlayer may be the same as the carbon-based conductive material of the electrode active material layer (e.g., may be included in both layers). Due to the inclusion of the carbon-based conductive material, the interlayer may be, for example, a conductive layer (e.g., may include a conductor). The interlayer may be, for example, a conductive layer including a binder and a carbon-based conductive material.

The interlayer may be disposed on the electrode current collector in a dry manner, for example by a CVD deposition method or a PVD deposition method. The interlayer may be disposed on the electrode current collector in a wet manner, for example by spin coating, dip coating, and/or the like. The interlayer may be disposed on the electrode current collector by, for example, depositing a carbon-based conductive material on the electrode current collector by deposition. The interlayer formed by dry coating may include a carbon-based conductive material and may not include (e.g., may exclude) a binder. The interlayer may be disposed on the electrode current collector by, for example, coating and drying a composition including a carbon-based conductive material, a binder and a solvent on the surface of the electrode current collector. The interlayer may have a single-layer structure or a multi-layer structure including a plurality of layers.

The electrode may be, for example, a cathode. The cathode may include a cathode active material layer, and the cathode active material layer may include a cathode active material.

The cathode active material included in the cathode active material layer may be a lithium metal oxide, and any suitable lithium metal oxide in the art can be utilized, without limitation.

The cathode active material may be or include, for example, a composite oxide of lithium and a metal selected from cobalt, manganese, nickel, and combinations thereof, and may be a compound represented by one of $Li_aA_{1-b}B'_bD_2$ (wherein $0.90 \leq a \leq 1$, and $0 \leq b \leq 0.5$); $Li_aE_{1-b}B'_bO_{2-c}D_c$ (wherein $0.90 \leq a \leq 1$, $0 \leq b \leq 0.5$, and $0 \leq c \leq 0.05$); $LiE_{2-b}B'_bO_{4-c}D_c$ (wherein $0 \leq b \leq 0.5$, and $0 \leq c \leq 0.05$); $Li_aNi_{1-b-c}Co_bB'_cD_\alpha$ (wherein $0.90 \leq a \leq 1$, $0 \leq b \leq 0.5$, $0 \leq c \leq 0.05$, and $0 < \alpha \leq 2$); $Li_aNi_{1-b-c}Co_bB'_cO_{2-\alpha}F_\alpha$ (wherein $0.90 \leq a \leq 1$, $0 \leq b \leq 0.5$, $0 \leq c \leq 0.05$, and $0 < \alpha < 2$); $Li_aNi_{1-b-c}Co_bB'_cO_{2-a}F'_2$ (wherein $0.90 \leq a \leq 1$, $0 \leq b \leq 0.5$, $0 \leq c \leq 0.05$, and $0 < \alpha \leq 2$); $Li_aNi_{1-b-c}Mn_bB'_cD_\alpha$ (wherein $0.90 \leq a \leq 1$, $0 \leq b \leq 0.5$, $0 \leq c \leq 0.05$, and $0 < \alpha < 2$); $Li_aNi_{1-b-c}Mn_bB'_cO_{2-\alpha}F'_a$ (wherein $0.90 \leq a \leq 1$, $0 \leq b \leq 0.5$, $0 \leq c \leq 0.05$, and $0 < \alpha < 2$); $Li_aNi_{1-b-c}Mn_bB'_cO_{2-\alpha}F'_2$ (wherein $0.90 \leq a \leq 1$, $0 \leq b \leq 0.5$, $0 \leq c \leq 0.05$, and $0 < \alpha < 2$); $Li_aNi_bE_cG_dO_2$ (wherein $0.90 \leq a \leq 1$, $0 \leq b \leq 0.9$, $0 \leq c \leq 0.5$, and $0.001 \leq d \leq 0.1$); $Li_aNi_bCo_cMn_dG_eO_2$ (wherein $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (wherein $0.90 \leq a \leq 1$ and $0.001 \leq b \leq 0.1$); $Li_aCoG_bO_2$ (wherein $0.90 \leq a \leq 1$ and $0.001 \leq b \leq 0.1$); $Li_aMnG_bO_2$ (wherein $0.90 \leq a \leq 1$ and $0.001 \leq b \leq 0.1$); $Li_aMn_2G_bO_4$ (wherein $0.90 \leq a \leq 1$ and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3 (0 \leq f \leq 2)$; $Li_{(3-f)}Fe_2(PO_4)_3 (0 \leq f \leq 2)$; and $LiFePO_4$.

In relation to the formulae representing the compounds, A may be nickel (Ni), cobalt (Co), manganese (Mn), or a combination thereof; B' may be aluminum (Al), nickel (Ni), cobalt (Co), manganese (Mn), chromium (Cr), iron (Fe), magnesium (Mg), strontium (Sr), vanadium (V), a rare-earth element, or a combination thereof; D may be oxygen (O), fluorine (F), sulfur (S), phosphorus (P), or a combination thereof; E may be cobalt (Co), manganese (Mn), or a combination thereof; F' may be fluorine (F), sulfur (S), phosphorus (P), or a combination thereof; G may be aluminum (Al), chromium (Cr), manganese (Mn), iron (Fe), magnesium (Mg), lanthanum (La), cerium (Ce), strontium (Sr), vanadium (V), or a combination thereof; Q may be titanium (Ti), molybdenum (Mo), manganese (Mn), or a combination thereof; I' may be chromium (Cr), vanadium (V), iron (Fe), scandium (Sc), yttrium (Y), or a combination thereof; and J may be vanadium (V), chromium (Cr), manganese (Mn), cobalt (Co), nickel (Ni), copper (Cu), or a combination thereof.

A coating layer compound may be added onto the surface of the cathode active material compounds described above, and a mixture of the coating layer compound and the cathode active material compound, may also be utilized (e.g., as a coating layer material). The coating layer added onto the surface of the compounds described above may include, for example, a coating element compound of: an oxide of a coating element; a hydroxide of a coating element; an oxyhydroxide of a coating element; an oxycarbonate of a coating element; and/or a hydroxycarbonate of a coating element. The compound(s) for the coating layer may be amorphous or crystalline. The coating element for the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. The coating layer may be formed utilizing any method that does not adversely affect the physical properties of the cathode active material when a compound of the coating element is utilized. For example, the coating layer may be formed utilizing a spray coating method and/or a dipping method. The coating methods may be well understood by one of ordinary skill in the art, and thus detailed description thereof will not be provided.

The cathode active material may be or include, for example, a composite cathode active material.

The composite cathode active material may include, for example, a core including a lithium transition metal oxide and a shell disposed along the surface of the core, wherein the shell includes: at least one first metal oxide represented by $M_aO_b$ (wherein $0<a \leq 3$, $0<b<4$, and when a is 1, 2, or 3, b is not an integer); and graphene, where the first metal oxide is disposed in a graphene matrix (e.g., a matrix of the graphene), M is at least one metal selected from Groups 2 to 13, 15, and 16 of the Periodic Table of the Elements, the lithium transition metal oxide includes nickel, and the amount of nickel is 80 mol% or more based on the total molar number of transition metals. A shell including a first metal oxide and graphene is disposed on the core of the composite cathode active material.

When graphene is used in the related art, a substantially uniform coating may not be formed on a core due to agglomeration. In contrast, the composite cathode active material uses a first composite including a plurality of first metal oxides disposed in a graphene matrix. Accordingly, agglomeration of graphene may be prevented or reduced, and a substantially uniform shell may be disposed on the core. Accordingly, contact between the core and the electrolyte may be effectively blocked, and thus, side reactions caused by the contact between the core and the electrolyte may be prevented or reduced. Reduction of nickel ions ($Ni^{3+}->Ni^{2+}$) and cation mixing caused by the electrolyte may be suppressed or reduced, and thus, the generation of a resistance layer such as a NiO phase may be suppressed or reduced. Furthermore, the elution of nickel ions may also be suppressed or reduced. The shell containing graphene has flexibility. Accordingly, the volume change of the composite cathode active material during charging and discharging may be easily tolerated and thus, the occurrence of cracks inside the composite cathode active material may be suppressed or reduced. Graphene has high electronic conductivity, and thus, the interfacial resistance between the composite cathode active material and an electrolyte may be reduced. Accordingly, despite the introduction of a shell including graphene, the internal resistance (e.g., a low internal resistance) of the lithium battery may be maintained or reduced. The first metal oxide has high voltage resistance (i.e., high withstand voltage). Accordingly, deterioration of the lithium transition metal oxide included in the core during charging and discharging at a high voltage may be prevented or reduced. As a result, the cycle life characteristics and/or high temperature stability of the lithium battery containing the composite cathode active material may be improved. The shell may include, for example, one first metal oxide or two or more different first metal oxides. Although the lithium transition metal oxide included in the composite cathode active material has a high nickel amount of 80 mol% or more with respect to the total molar number of transition metal, due to the arrangement of a shell containing the first metal oxide and graphene on the core, high discharge capacity and cycle life characteristics may be provided concurrently (e.g., simultaneously). Therefore, the composite cathode active material having a high nickel amount of 80 mol% or more can provide an improved capacity compared to a composite cathode active material having a relatively low nickel amount, and at the same time, provide excellent or suitable lifespan characteristics. The metal included in the first metal oxide may be, for example, at least one selected from aluminum (Al), niobium (Nb), magnesium (Mg), scandium (Sc), titanium (Ti), zirconium (Zr), vanadium (V), tungsten (W), manganese (Mn), iron (Fe), cobalt (Co), palladium (Pd), copper (Cu), silver (Ag), zinc (Zn), antimony (Sb), and selenium (Se).

The first metal oxide may be, for example, one or more of $Al_2O_z(0<z<3)$, $NbO_x(0<x<2.5)$, $MgO_x(0<x<1)$, $Sc_2O_z$ $(0<z<3)$, $TiO_y(0<y<2)$, $ZrO_y(0<y<2)$, $V_2O_z(0<z<3)$, $WO_y(0<y<2)$, $MnO_y(0<y<2)$, $Fe_2O_z(0<z<3)$, $Co_3O_w(0<w<4)$, $PdO_x$ $(0<x<1)$, $CuO_x(0<x<1)$, $AgO_x(0<x<1)$, $ZnO_x(0<x<1)$, $Sb_2O_z(0<z<3)$, and/or $SeO_y(0<y<2)$. Because the first metal oxide is disposed (e.g., dispersed) in the graphene matrix, the uniformity of the shell disposed on the core is improved, and the voltage resistance of the composite cathode active material is further improved. For example, the shell may include, as the first metal oxide, $Al_2O_x(0<x<3)$. The shell may further include one or more second metal oxides represented by $M_aO_c$ $(0<a\leq3, 0<c\leq4$, when a is 1, 2, or 3, c is an integer). M may be at least one metal selected from Groups 2 to 13, 15, and 16 of the Periodic Table of the Elements. For example, the second metal oxide includes the same metal as included in the first metal oxide, and a ratio c/a of the second metal oxide has a larger value than a ratio b/a of the first metal oxide. For example, $c/a > b/a$. The second metal oxide may be, for example, selected from $Al_2O_3$, $NbO$, $NbO_2$, $Nb_2O_5$, $MgO$, $Sc_2O_3$, $TiO_2$, $ZrO_2$, $V_2O_3$, $WO_2$, $MnO_2$, $Fe_2O_3$, $Co_3O_4$, $PdO$, $CuO$, $AgO$, $ZnO$, $Sb_2O_3$, and $SeO_2$. The first metal oxide may be a reduction product of the second metal oxide. For example, the first metal oxide may be obtained by reducing some or all of the second metal oxide. Therefore, the first metal oxide has a smaller oxygen amount and a lower (e.g., less positive) metal oxidation number than the second metal oxide. For example, the shell includes the first metal oxide, $Al_2O_x(0<x<3)$ and the second metal oxide $Al_2O_3$. In the composite cathode active material, graphene contained in the shell and the transition metal of lithium transition metal oxide contained in the core may be chemically bound. For example, the carbon atom (C) of graphene in the shell and the transition metal (Me) of the lithium transition metal oxide in the core may be chemically bound to each other through a C-O-Me bond (for example, a C-O-Ni bond) via (through) an oxygen atom. Due to the chemical bonding between the graphene in the shell and lithium transition metal oxide in the core, the core and the shell are complexed (e.g., form a complex) at their interface. Accordingly, the structure is distinguished from a simple physical mixture of graphene and lithium transition metal oxide. The first metal oxide (e.g., in the shell) and the graphene included in the shell are also chemically bound. Here, the chemical bond may be a covalent bond or an ionic bond. The covalent bond is a bond including at least one of an ester group, an ether group, a carbonyl group, an amide group, a carbonate anhydride group, and an acid anhydride group. An ionic bond is a bond containing a carboxylate ion, an ammonium ion, or an acyl cation group. The thickness of the shell may be, for example, 1 nm to 5 $\mu$m, 1 nm to 1 $\mu$m, 1 nm to 500 nm, 1 nm to 200 nm, 1 nm to 100 nm, 1 nm to 90 nm, 1 nm to 80 nm, 1 nm to 70 nm, 1 nm to 60 nm, 1 nm to 50 nm, 1 nm to 40 nm, 1 nm to 30 nm, 1 nm to 20 nm, or 1 nm to 10 nm. Due to the shell having these ranges of thickness, the increase in internal resistance of the lithium battery included in the composite cathode active material may be suppressed or reduced.

The amount of the first composite included in the composite cathode active material may be 3 wt% or less, 2 wt% or less, 1 wt% or less, 0.5 wt% or less, or 0.2 wt% or less, based on the total weight of the composite cathode active material. The amount of the first composite may be 0.01 wt% to 3 wt%, 0.01 wt% to 1 wt%, 0.01 wt% to 0.7 wt%, 0.01 wt% to 0.6 wt%, 0.1 wt% to 0.5 wt%, 0.01 wt% to 0.2 wt%, 0.01 wt% to 0.1 wt%, or 0.03 wt% to 0.07 wt%, based on the total weight of the composite cathode active material. Due to the inclusion of these amount ranges of the first composite in the composite cathode active material, the cycle life characteristics of the lithium battery including the composite cathode active material may be further improved. The average particle diameter of one or more selected from the first metal oxide and the second metal oxide included in the first composite may be 1 nm to 1 $\mu$m, 1 nm to 500 nm, 1 nm to 200 nm, 1 nm to 100 nm, 1 nm to 70 nm, 1 nm to 50 nm, 1 nm to 30 nm, 3 nm to 30 nm, 3 nm to 25 nm, 5 nm to 25 nm, 5 nm to 20 nm, or 7 nm to 20 nm. Due to having such nano-range particle sizes, the first metal oxide and/or the second metal oxide may be substantially more uniformly distributed in the graphene matrix of the first composite. Therefore, the first composite may be substantially uniformly coated on the core without agglomeration to form a shell. In addition, the first metal oxide and/or the second metal oxide may be more uniformly disposed on the core. As a result, voltage resistance may be improved. The average particle diameter of the first metal oxide and the second metal oxide may be measured by utilizing, for example, a laser diffraction method and/or a dynamic light scattering method. The average particle diameter may be measured by utilizing, for example, a laser scattering particle size distribution meter (for example, Horiba Corporation LA-920), and is a value of the median particle diameter (D50) which corresponds to the mid-point value (50%) of a cumulative particle size distribution, in which particles are accumulated and from smaller particles to larger particles by volume.

The composite cathode active material includes a core and the core may include a lithium transition metal oxide represented by, for example, Formula 1:

Formula 1 $\quad Li_aNi_xCo_yM_zO_{2-b}A_b$

wherein, in Formula 1, $1.0 \leq a \leq 1.2$, $0 \leq b \leq 0.2$, $0.8 \leq x < 1$, $0 < y \leq 0.3$, $0 < z \leq 0.3$, and $x+y+z=1$, M is at least one selected from manganese (Mn), niobium (Nb), vanadium (V), magnesium (Mg), gallium (Ga), silicon (Si), tungsten (W), molybdenum (Mo), iron (Fe), chromium (Cr) ), copper (Cu), zinc (Zn), titanium (Ti), aluminum (Al), and boron (B), and A is F, S, Cl, Br, or a combination thereof.

The core including the composite cathode active material may include a lithium transition metal oxide represented by, for example, one of Formulae 2 to 6:

Formula 2 $\quad LiNi_xCo_yMn_zO_2$

Formula 3 $\quad LiNi_xCo_yAl_zO_2$

wherein, in these formulae, $0.8 \leq x \leq 0.95$, $0 < y \leq 0.2$, $0 < z \leq 0.2$, and $x+y+z=1$;

Formula 4 $\quad LiNi_xCo_yAl_vMn_wO_2$

wherein $0.8 \leq x \leq 0.95$, $0 < y \leq 0.2$, $0 < v \leq 0.2$, $0 < w \leq 0.2$, and $x+y+v+w=1$;

Formula 5 $\quad Li_aM1_xM2_yPO_{4-b}X_b$

wherein, in Formula 5, $0.90 \leq a \leq 1.1$, $0 \leq x \leq 0.9$, $0 \leq y \leq 0.5$, $0.9 < x+y < 1.1$, and $0 \leq b \leq 2$,
M1 may be chromium (Cr), manganese (Mn), iron (Fe), cobalt (Co), nickel (Ni), copper (Cu), zirconium (Zr) or a combination thereof, and
M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P, or a combination thereof;

Formula 6 $\quad Li_aM3_zPO_4$

wherein, in Formula 6, $0.90 \leq a \leq 1.1$ and $0.9 \leq z \leq 1.1$, and
M3 may be chromium (Cr), manganese (Mn), iron (Fe), cobalt (Co), nickel (Ni), copper (Cu), zirconium (Zr), or a combination thereof.

The electrode may be, for example, an anode. The anode may include an anode active material layer, and the anode active material layer may include an anode active material.

The anode active material may be any anode active material of a lithium battery in the art. For example, at least one selected from lithium metal, a metal alloyable with lithium, a transition metal oxide, a non-transition metal oxide, and a carbon-based material may be included. The metal alloyable with lithium may be: for example, Si, Sn, Al, Ge, Pb, Bi, Sb, a Si-Y alloy (where Y is an alkali metal, alkaline earth metal, a Group 13 element, a Group 14 element excluding Si, a transition metal, a rare-earth element, or a combination element thereof); or a Sn-Y alloy (where Y is an alkali metal, alkaline earth metal, a Group 13 element, a Group 14 element excluding Sn, a transition metal, a rare-earth element, or a combination element thereof). The element Y may be or include, for example, magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), titanium (Ti), germanium (Ge), phosphorus (P), arsenic (As), antimony (Sb), bismuth (Bi), sulfur (S), selenium (Se), tellurium (Te), polonium (Po), or a combination thereof. The transition metal oxide may be or include, for example, lithium titanium oxide, vanadium oxide, or lithium vanadium oxide. The non-transition metal oxide may be or include, for example, $SnO_2$ or $SiO_x$ ($0<x<2$). The carbon-based material may be or include, for example, crystalline carbon, amorphous carbon, or a mixture thereof. The crystalline carbon may be or include, for example, graphite (such as natural or artificial graphite in an amorphous form, a plate-like form, a flakelike form, a spherical form, or a fibrous form). The amorphous carbon may be, for example, a soft carbon (low temperature calcined carbon), a hard carbon, mesophase pitch carbide, calcined coke, etc.

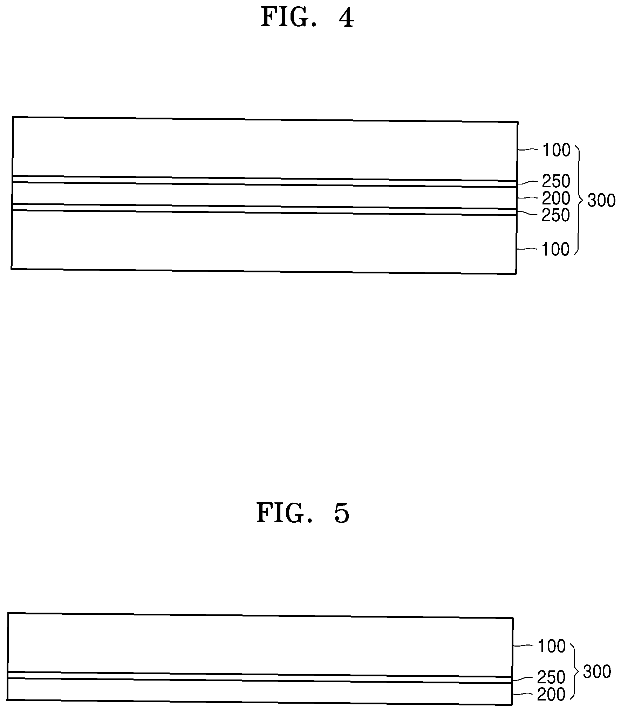

Referring to FIG. 4, an electrode 300 includes an electrode active material layer 100 including an electrode active material and a binder; an electrode current collector 200 disposed between opposite surfaces (e.g., within the interior) of the electrode active material layer 100; and an interlayer 250 disposed between the electrode active material layer 100 and the electrode current collector 200. Referring to FIG. 5, an electrode 300 includes an electrode active material layer 100 including an electrode active material and a binder; an electrode current collector 200 disposed on one surface of the electrode active material layer 100; and an interlayer 250 disposed between the electrode active material layer 100 and the electrode current collector 200.

The electrode current collector 200 may be disposed on only a portion of the electrode active material layer 100.

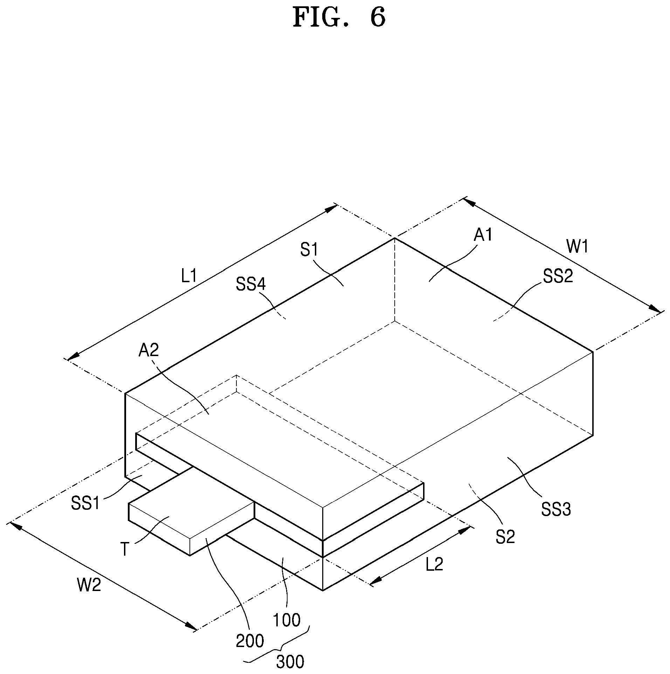

Referring to FIG. 6, in the electrode 300, the electrode active material layer 100 includes a first surface S1 and a second surface S2 opposing the first surface S1, a first side surface SS1 connected to ends of the first surface S1 and the second surface S2 in the length (longitudinal) directions thereof and a second side surface SS2 opposing the first side surface SS1, a third side surface SS3 connected to ends of the first surface S1 and the second surface S2 in the width (widthwise) directions thereof and a fourth side surface SS4 opposing the third side surface SS3. The electrode active material layer 100 has a first area A1 (e.g., planar or plan view area) defined by a first longitudinal distance L1 and a first widthwise distance W1, the electrode current collector 200 is disposed between the first surface S1 and the second surface S2, the electrode current collector 200 has a second area A2 defined by a second longitudinal distance L2 and a second widthwise distance W2, and the second area A2 of the electrode current collector 200 is less than 100% of (e.g., is smaller than) the first area A1 of the electrode active material layer 100. For example, the second area A2 of the electrode current collector 200 may be 10% to 90%, 10% to 80%, 10% to 70%, 10% to 60%, 10% to 50%, 10% to 40%, 10% to 30%, or 10% to 20% of the first area A1 of the electrode active material layer 100.

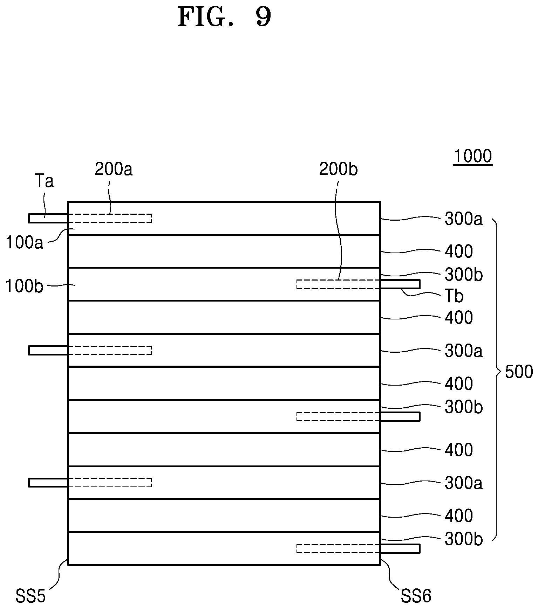

Because the area of the electrode current collector 200 in the electrode 300 is smaller than that of the electrode active material layer 100, the energy density of a lithium battery (see 1000 of FIG. 9) including the electrode 300 may be improved.

Referring to FIG. 6, the second longitudinal distance L2 of the electrode current collector 200 may be less than 100% of the first longitudinal distance L1 of the electrode active material layer 100. For example, the second longitudinal distance L2 of the electrode current collector 200 may be 10% to 90%, 10% to 80%, 10% to 70%, 10% to 60%, 10% to 50%, 10% to 40%, 10% to 30%, or 10% to 20% of the first longitudinal distance L1 of the electrode active material layer 100. The second widthwise distance W2 of the electrode current collector 200 may be less than 100% of the first widthwise distance W1 of the electrode active material layer 100. For example, the second widthwise distance W2 of the electrode current collector 200 may be 10% to 90%, 10% to 80%, 10% to 70%, 10% to 60%, 10% to 50%, 10% to 40%, 10% to 30%, or 10% to 20% of the first widthwise distance W1 of the electrode active material layer 100. For example, the second longitudinal distance L2 of the electrode current collector 200 may be less than 100% of the first longitudinal distance L1 of the electrode active material layer 100, and the second widthwise distance W2 of the electrode current collector 200 may be less than 100% of the first widthwise distance W1 of the electrode active material layer 100. Due to such a size of the electrode current collector 200, the energy density of the lithium battery (see 1000 of FIG. 9) including the electrode 300 may be improved.

Referring to FIG. 6, the electrode current collector 200 may be exposed on three or fewer side surfaces selected from the first side surface SS1, the second side surface SS2, the third side surface SS3, and the fourth side surface SS4 of the electrode active material layer 100. Because the electrode current collector 200 has a smaller area than that of the electrode active material layer 100, the electrode current collector 200 may be exposed on some (e.g., only some) of the side surfaces of the electrode active material layer 100, for example, three, two, or one side surfaces thereof. As the number of the side surfaces of the electrode active material layer 100, on which the electrode current collector 200 is exposed, is reduced, the possibility of a short circuit through the side surface of the electrode active material layer 100 is reduced, and the safety of the lithium battery (see 1000 of FIG. 9) is improved.

Referring to FIG. 6, the electrode current collector 200 may further include a tab extending to the outside (e.g., exterior) of the electrode active material layer 100 through at most two (e.g., one or two) side surfaces selected from the first side surface SS1, the second side surface SS2, the third side surface SS3, and the fourth side surface SS4. For example, the tab T may extend to the outside of the electrode active material layer 100 through the first side surface SS1 and/or the second side surface SS2. The tab T extends to the outside of the electrode active material layer 100 through the third side surface SS3 and/or the fourth side surface SS4. When the tab T extends to the outside of the electrode active material layer 100 through one side surface or two opposing sides of the electrode active material layer 100, a short circuit by a plurality of adjacent tabs may be prevented or reduced.

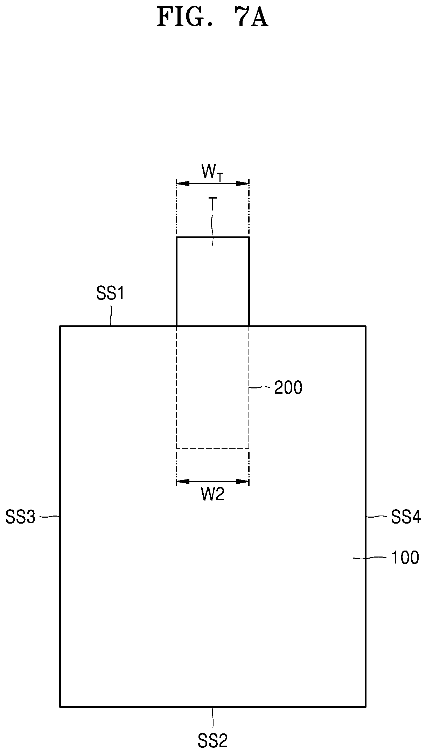

Referring to FIGS. 7A to 7F, the electrode current collector 200 may have various suitable shapes and may be disposed in various suitable positions within the electrode active material layer 100.

Referring to FIG. 7A, the electrode current collector 200 is exposed on the first side surface SS1 of the electrode active material layer 100, and includes the tab T extending to the outside of the electrode active material layer 100 through the first side surface SS1. The widthwise distance (width) $W_T$ of the tab T may be 100% of (e.g., may be the same as) the second widthwise distance (width) W2 of the electrode current collector 200.

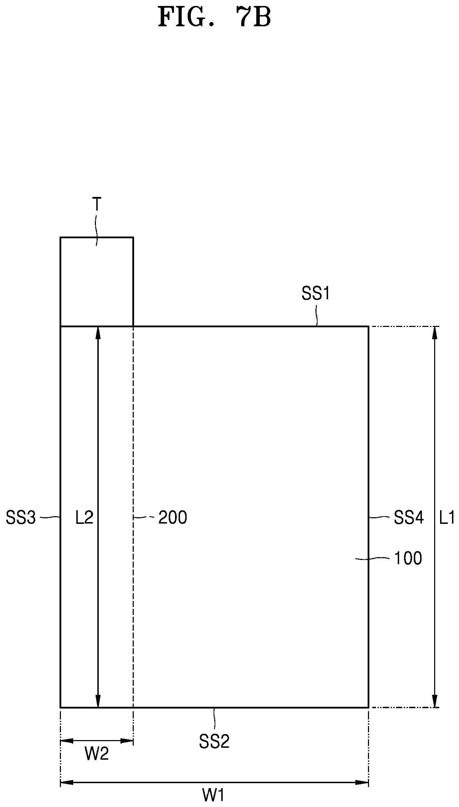

Referring to FIG. 7B, the electrode current collector 200 may be exposed on the first side surface SS1, the second side surface SS2, and the third side surface SS3 of the electrode active material layer 100, and includes the tab T extending to the outside of the electrode active material layer 100 through the first side surface SS1. The second longitudinal distance (length) L2 of the electrode current collector 200 is 100% of (e.g., the same as) the first longitudinal distance (length) L1 of the electrode active material layer 100. The second widthwise distance (width) W2 of the electrode current collector 200 may be less than 100% of (e.g., smaller than) the first widthwise distance (width) W1 of the electrode active material layer 100.

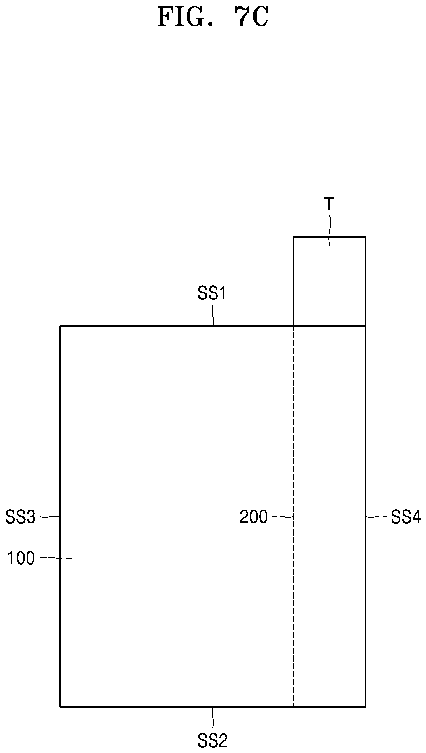

Referring to FIG. 7C, the electrode current collector 200 may be exposed on the first side surface SS1, the second side surface SS2, and the fourth side surface SS4 of the electrode active material layer 100, and includes the tab T extending to the outside of the electrode active material layer 100 through the first side surface SS1.

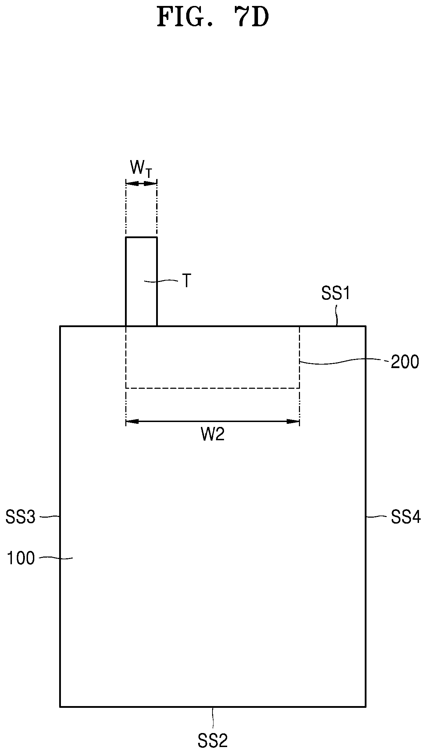

Referring to FIG. 7D, the electrode current collector 200 is exposed on the first side surface SS1 of the electrode active material layer 100, and includes the tab T extending to the outside of the electrode active material layer 100 through the first side surface SS1. The widthwise distance (width) $W_T$ of the tab T may be less than 100% of (e.g., smaller than) the second widthwise distance W2 of the electrode current collector 200.

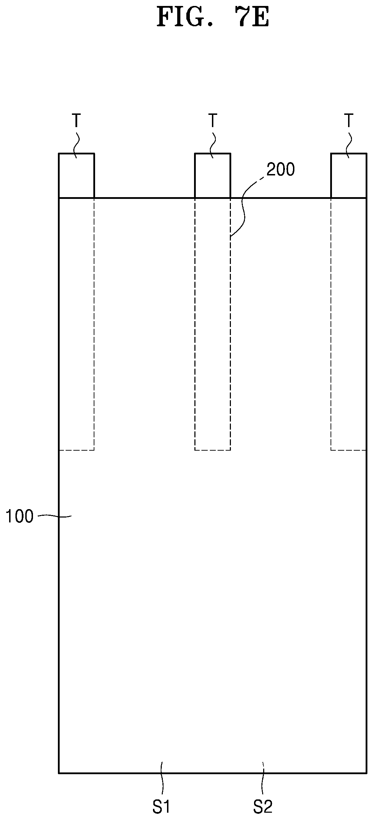

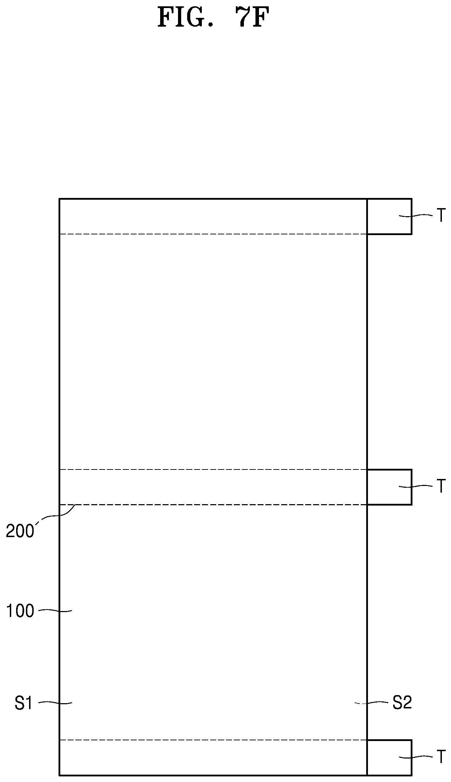

Referring to FIGS. 7E and 7F, a plurality of electrode current collectors 200 may be provided and spaced apart from each other in a longitudinal direction or a width direction of the electrode active material layer 100. The plurality of current collectors 200 may be spaced apart at substantially the same intervals, or may be spaced apart from each other at different (e.g., varying) intervals. The plurality of electrode current collectors 200 may each form an angle of 45 degrees or less, 40 degrees or less, 30 degrees or less, 25 degrees or less, 20 degrees or less, 15 degrees or less, 10 degrees or less, or 5 degrees or less, with respect to one surface of the electrode active material layer 100, for example, at least one of the first surface S1 and the second surface S2 thereof. For example, the plurality of current collectors 200 may form an angle of 0 degrees with respect to one surface of the electrode active material layer 100. For example, the plurality of current collectors 200 and the electrode active material layer 100 may be arranged in parallel (e.g., so that they form a set of substantially parallel planes). The plurality of electrode current collectors 200 may be disposed between the first surface S1 and the second surface S2 of the electrode active material layer 100.

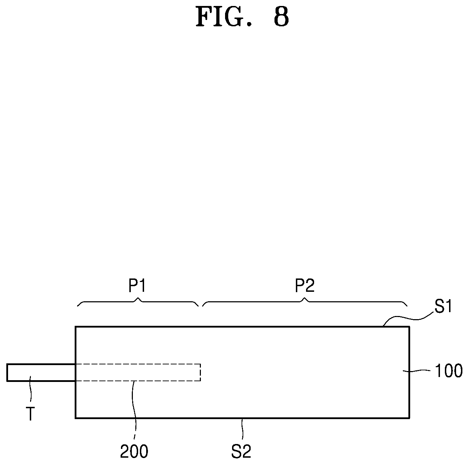

Referring to FIG. 8, the electrode active material layer 100 includes a first region P1 in which the electrode current collector 200 is disposed between the first surface S1 and the second surface S2; and a second region P2 in which the electrode current collector 200 is not disposed between the first surface S1 and the second surface S2, wherein the mixture density of the second region P2 is different from the mixture density of the first region P1. For example, the mixture density of the second region P2 may be less than 100% of the mixture density of the first region P1. For example, the mixture density of the second region P2 may be 50% to 99.9%, 60% to 99%, 70% to 99%, 80% to 99%, 80% to 98%, 80% to 97%, 80% to 96%, or 80% to 95%, of the mixture density of the first region P1.

Another aspect of the present disclosure provides a lithium battery including a cathode, an anode, and an electrolyte disposed between the cathode and the anode, wherein at least one of the cathode and/or the anode is the electrode described above.

Referring to FIGS. 9 to 11, the lithium battery 1000 includes (a) cathode(s) 300a, (an) anode(s) 300b, and (an) electrolyte(s) 400 disposed between the cathode(s) 300a and the anode(s) 300b, wherein at least one of the cathode(s) 300a and/or the anode(s) 300b is the electrode described above.

Referring to FIG. 9, an electrode assembly 500 includes a plurality of cathodes 300a stacked along a thickness direction thereof, a plurality of anodes 300b each located between neighboring cathodes 300a, and a plurality of electrolytes 400, each disposed between pairs of the cathodes 300a and the anodes 300b. The cathode 300a includes a cathode current collector 200a, and the cathode current collector 200a includes a cathode tab Ta extending to the outside of the cathode active material layer 100a through one side SS5 of the electrode assembly 500, and the anode 300b includes an anode current collector 200b, and the anode current collector 200b includes an anode tab Tb extending to the outside of the anode active material layer 100b through another side SS6 opposing the one side SS5 of the electrode assembly 500. The lithium battery 1000 includes an electrode assembly 500. Because the cathode tab Ta and the anode tab Tb are disposed on opposite sides of each other, the possibility of a short circuit therebetween is reduced.

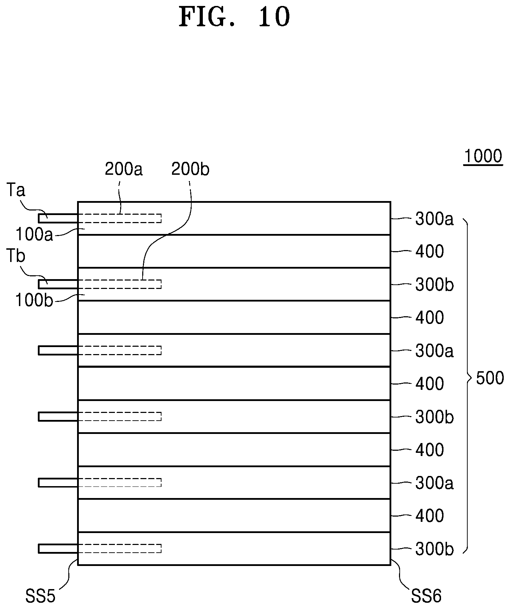

Referring to FIG. 10, an electrode assembly 500 includes a plurality of cathodes 300a stacked along a thickness direction thereof, a plurality of anodes 300b each located between neighboring cathodes 300a, and a plurality of electrolytes 400, each disposed between pairs of the cathodes 300a and the anodes 300b. The cathode 300a includes a cathode current collector 200a, and the cathode current collector 200a includes a cathode tab Ta extending to the outside of the cathode active material layer 100a through one side SS5 of the electrode assembly 500, and the anode 300b includes an anode current collector 200b, and the anode current collector 200b includes an anode tab Tb extending to the outside of the anode active material layer 100b through the one side SS5 of the electrode assembly 500. The lithium battery 1000 includes the electrode assembly 500.

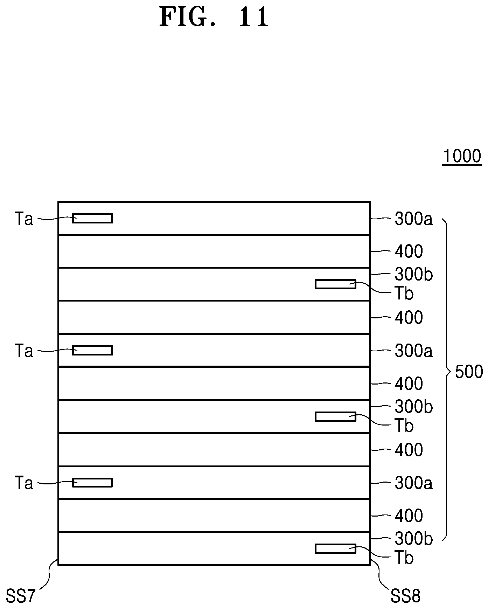

Referring to FIG. 11, on the one side of the electrode assembly 500, a plurality of cathode tabs Ta are disposed at regular intervals in the thickness direction of the electrode assembly 500, and a plurality of anode tabs Tb are disposed spaced apart from each other at regular intervals in the thickness direction of the electrode assembly 500. The plurality of cathode tabs Ta are disposed adjacent to one side surface SS7 of the electrode assembly 500 in the width direction thereof, and the plurality of anode tabs Tb are disposed adjacent to another side surface SS8 of the electrode assembly 500 in the width direction thereof. FIG. 11 is a front view of the one side SS5 of FIG. 10. The lithium battery 1000 includes the electrode assembly 500.

As shown in FIG. 11, although the cathode tab Ta and the anode tab Tb are disposed on the same side surface, because they are spaced apart from each other in the width direction, the possibility of a short circuit therebetween is reduced.

The lithium battery 1000 may be, for example, a lithium ion battery, a lithium solid battery, and a lithium air battery.

An electrode manufacturing method according to an embodiment is provided.

The electrode manufacturing method includes: preparing a mixture by dry mixing an electrode active material, a dry conductive material, and a dry binder; providing an electrode current collector with an interlayer disposed on one surface or on both opposite surfaces thereof; and placing the electrode active material on the one surface or on both the opposite surfaces of the electrode current collector by arranging and pressing the mixture on the one surface or on both the opposite surfaces of the electrode current collector, wherein the interlayer includes a binder. When the electrode active material layer is measured by a SAICAS, the ratio of change of a vertical relative force ($F_{VR}$) between a first point, which is 5% away from the surface of the electrode active material layer, and a second point, which is 5% away from the surface of the electrode current collector, with respect to the total thickness of the electrode active material layer, may be 300% or less. When an electrode is manufactured by utilizing such a method, a substantially uniform binding force distribution within the electrode may be achieved or improved, and the binding force of the electrode active material layer and the electrode current collector may be improved. Accordingly, a lithium battery utilizing the electrode may be further improved.

First, a mixture is prepared by dry mixing an electrode active material, a dry conductive material, and a dry binder. The term "dry mixing" refers to mixing without the inclusion of a process solvent. The term "process solvent" may refer to a solvent utilized in the preparation of an electrode slurry. Example process solvents include water, N-methylpyrrolidone (NMP), etc., but are not limited thereto, and include various suitable process solvents in the art. In an embodiment, dry mixing may be performed at a temperature of 25 °C to 65 °C by utilizing a stirrer. In an embodiment, dry mixing may be performed at a rotation speed of 10 rpm to 10,000 rpm or 100 rpm to 10,000 rpm, by utilizing a stirrer. In an embodiment, dry mixing may be performed for 1 minutes to 200 minutes or 1 minute to 150 minutes by utilizing a stirrer.

In an embodiment, dry mixing may be performed one or more times. First, an electrode active material, a dry conductive material, and a dry binder are subjected to a first dry mixing to prepare a first mixture. In an embodiment, the first dry mixing may be performed at a temperature of 25 °C to 65 °C, and at a rotation speed of 2000 rpm or less, and for 15 minutes or less. In an embodiment, the first dry mixing may be performed at a temperature of 25 °C to 65 °C, and at a rotation speed of 500 rpm to 2000 rpm, and for 5 minutes to 15 minutes. As a result of the first dry mixing, the electrode active material, the dry conductive material, and the dry binder may be substantially uniformly mixed. Then, an electrode active material, a dry conductive material, and a dry binder are subjected to a second dry mixing to prepare a second mixture. In an embodiment, the second dry mixing may be performed at a temperature of 25 °C to 65 °C, and at a rotation speed of 4000 rpm or more, and for 10 minutes or more. For example, the second dry mixing may be carried out at a temperature of 25 °C to 65 °C, at a rotation speed of 4000 rpm to 9000 rpm, and for 10 minutes to 60 minutes, 10 minutes to 50 minutes, 10 minutes to 40 minutes, or 10 minutes to 30 minutes. As a result of the second dry mixing, a dry mixture including a fibrillated dry binder may be obtained.

The stirrer may be, for example, a kneader. The stirrer may include: a chamber; at least one rotating shaft disposed inside the chamber to rotate; and a blade rotatably coupled to the rotation shaft and disposed in the longitudinal direction of the rotation shaft. The blade may be, for example, one or more selected from a ribbon blade, a sigma blade, a jet (Z) blade, a dispersion blade, and a screw blade. Due to the inclusion of the blade, the electrode active material, the dry conductive material, and the dry binder may be effectively mixed to prepare a dough-like mixture without a solvent. The prepared mixture may be introduced into an extrusion device and extruded in the form of a sheet. The pressure during extrusion may be, for example, 4 MPa to 100 MPa, or 10 MPa to 90 MPa. The obtained mixture may be in the form of a sheet. For example, the obtained mixture may be an electrode active material layer.

The dry conductive material may be or include carbon black, graphite fine particles, natural graphite, artificial graphite, acetylene black, ketjen black, carbon fiber, carbon nanotubes, metal powder, metal fiber or metal tube of coper, nickel, aluminum or silver, and/or a conductive polymer (such as a polyphenylene derivative). However, the present disclosure is not limited thereto, and any suitable conducting agent in the art may be utilized. The conductive material may be, for example, a carbon-based conductive material.

The dry binder may be or include a vinylidene fluoride/hexafluoropropylene copolymer, polyvinylidene fluoride, polyacrylonitrile, polymethyl methacrylate, polytetrafluoroethylene (PTFE), a mixture of the above polymers, and/or styrene butadiene rubber-based polymer, and the solvent may be or include N-methylpyrrolidone (NMP), acetone, and/or water. However, the present disclosure is not limited thereto, and any solvent may be utilized as long as it is utilized in the art.

Pores may be formed inside an electrode plate by further adding a plasticizer or a pore forming agent to the electrode active material composition.

The amounts of the electrode active material, the dry conductive material, and the dry binder utilized in the electrode active material layer may be the same or similar to levels utilized in related art lithium batteries.

The cathode includes a cathode active material as an electrode active material. The cathode active material may be understood by referring to the description made in connection with the electrode. The anode includes an anode active material as an electrode active material. The anode active material may be understood by referring to the description made in connection with the electrode.

Next, an electrode current collector having an interlayer disposed on one surface or on both opposite surfaces thereof is provided.

The providing of an electrode current collector with the interlayer disposed the one side or on both the opposite surfaces thereof may include, for example, providing the electrode current collector, and disposing the interlayer on the one side or on both the opposite surfaces of the electrode current collector.

The material of the electrode current collector may be understood by referring to the description made in connection with the electrode current collector. The cathode current collector may be, for example, aluminum foil. The anode current collector may be, for example, copper foil.

The disposing the interlayer on the one surface or on both opposite surfaces of the electrode current collector may include arranging the interlayer the one surface or on both the opposite surfaces of the electrode current collector by a dry or wet method. Regarding dry coating, for example, a carbon-based conductive material and/or a precursor thereof may be coated on the one surface or on both the opposite surfaces of an electrode current collector by deposition and/or the like. The deposition may be carried out at room temperature or at high temperature, and/or at normal pressure or in a vacuum condition. When the interlayer disposed by dry coating includes (e.g., consists of) a carbon-based material, a binder may not be included therein. Regarding wet coating, for example, a composition containing a carbon-based conductive material and a binder may be coated on one surface or on both opposite surfaces of an electrode current collector. The composition may include, for example, a carbon-based conductive material, a binder and a process solvent. The carbon-based conductive material and the binder may be understood by referring to the description made in connection with the electrode provided above. The process solvent may be selected from solvents utilized in the preparation of the electrode slurry. The process solvent may be removed by drying after the composition is coated on the electrode current collector. The coating method is not limited to spin coating, dip coating, etc., and any suitable coating method in the art can be utilized.

Then, the electrode active material is placed on the one surface or on both the opposite surfaces of the electrode current collector by arranging and pressing the mixture on the one surface or on both the opposite surfaces of the electrode current collector. The pressing may be, for example, a roll press, a plate press, etc., but is not necessarily limited thereto. The pressure during pressing may be, for example, 1.0 ton/cm to 10.0 ton/cm. When the pressure during pressing is excessive, a thin film electrode current collector may crack. When the pressure during pressing is too low (insufficient), the binding force between the electrode current collector and the electrode active material layer may be low (insufficient).

The lithium battery may be manufactured by, for example, the following example method, but the present disclosure is not necessarily limited to this method and may be adjusted according to required conditions.

First, one or both of the cathode and the anode may be manufactured according to the electrode manufacturing method described above. In some embodiments, when one electrode of the cathode and the anode is manufactured by the electrode manufacturing method described above, the other electrode may be manufactured by a wet manufacturing method. For example, the other electrode may be manufactured by preparing an electrode slurry including an electrode active material, a conductive material, a binder and a solvent, coating the prepared electrode slurry on an electrode current collector, and drying the electrode slurry. The conductive material and the binder included in the electrode manufactured by a wet method, may be selected from suitable wet method conductive materials and binders.

Next, a separator to be inserted between the cathode and the anode is prepared.

The separator may be any suitable separator that is commonly utilized in a lithium battery. Any suitable separator having low resistance to electrolyte ion movement and/or excellent or suitable electrolyte-moisturizing ability may be utilized. The separator may be a non-woven or woven fabric including at least one selected from fiberglass, polyester, Teflon, polyethylene, polypropylene, polytetrafluoroethylene (PTFE), and a combination thereof. In the case of a lithium ion battery, for example, a separator that can be wound up may be utilized, and examples thereof may include polyethylene and/or polypropylene. In the case of a lithium ion polymer battery, a separator with excellent or suitable organic electrolyte impregnation ability may be utilized.

The separator is manufactured by the following example method, but the present disclosure is not necessarily limited to this method and may be adjusted according to required conditions.

First, a polymer resin, a filler, and a solvent are mixed to prepare a separator composition. The separator composition may be directly applied and dried on an electrode to form a separator. In some embodiments, a film obtained by casting and drying the separator composition on a support and then separating the composition from the support, may be laminated on the electrode to form a separator.

The polymer utilized for manufacturing the separator is not particularly limited, and any suitable polymer for the binder of an electrode plate may be utilized. For example, a vinylidene fluoride/hexafluoropropylene copolymer, polyvinylidene fluoride (PVDF), polyacrylonitrile, polymethyl methacrylate, or a mixture thereof may be utilized as the polymer.

Next, an electrolyte is prepared.

The electrolyte may be, for example, an organic electrolyte. In an embodiment, an organic electrolyte may be prepared by dissolving lithium salt in an organic solvent.

As the organic solvent, any suitable organic solvent in the art may be utilized. The organic solvent is, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, diox-olane, 4-methyldioxolane, N,N-dimethylformamide, dimethylacetamide, dimethylsulfoxide, dioxane, 1,2-dimethoxyethane, sulfolane, dichloroethane, chlorobenzene, nitrobenzene, diethylene glycol, dimethyl ether, or a mixture thereof.

As the lithium salt, any suitable lithium salt in the art may be utilized. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where x and y are each a natural number), $LiCl$, $LiI$, or a combination thereof.

In some embodiments, the electrolyte may be a solid electrolyte. The solid electrolyte may be, for example, boron oxide, lithium oxynitride, etc., but is not limited thereto, and any suitable solid electrolyte in the art may be utilized. The solid electrolyte may be formed on the anode by, for example, sputtering, or as a separate solid electrolyte sheet that is laminated on the anode. The solid electrolyte may be, for example, an oxide-based solid electrolyte or a sulfide-based solid electrolyte.

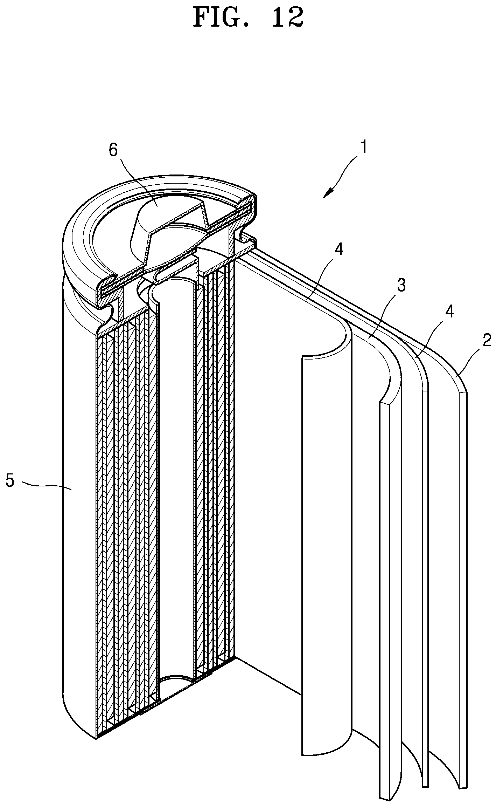

Referring to FIG. 12, a lithium battery 1 includes a cathode 3, an anode 2, and a separator 4. The cathode 3, the anode 2, and the separator 4 may be wound or folded and housed in a battery case 5. An organic electrolyte is injected into the battery case 5 and sealed with a cap assembly 6 to complete the manufacture of the lithium battery 1. The battery case 5 may be cylindrical, but the shape thereof is not necessarily limited thereto. For example, the battery case 5 may be rectangular, a thin- film shape, etc.

A pouch format lithium battery contains one or more battery structures. A separator is disposed between a cathode and an anode to form a battery structure. After being stacked in the form of a bi-cell structure, the battery structures are impregnated with an organic electrolyte, and housed and sealed in a pouch, thereby completing the manufacture of a pouch format lithium battery. A plurality of battery structures may be stacked to form a battery pack, and the battery pack may be utilized in all types (kinds) of devices requiring high capacity and high output. For example, the battery structures may be utilized in laptops, smartphones, and electric vehicles.

Because lithium batteries have excellent or suitable lifespan characteristics and/or high rate characteristics, they may be utilized in, for example, electric vehicles (EVs). For example, lithium batteries may be utilized in hybrid vehicles (such as plug-in hybrid electric vehicle (PHEV)). Also, lithium batteries may be utilized in a field requiring a large amount of power storage. For example, lithium batteries may be utilized in electric bicycles, power tools, etc.

Hereinafter, the present disclosure will be described in more detail through the following Examples and Comparative Examples. However, these Examples are intended to illustrate the present disclosure, and the scope of the present disclosure is not limited thereto.

**Preparation of first composite**

**Preparation Example 1:** $Al_2O_3$@Gr **first composite**

$Al_2O_3$ particles (average particle diameter: about 15 nm) were placed in a reactor, and then, $CH_4$ was fed into the reactor at about 300 sccm and 1 atm for about 30 minutes, and the temperature inside the reactor was raised to 1000 °C.

Then, the temperature was maintained for 7 hours to perform a heat treatment. Then, the temperature inside the reactor was adjusted to be room temperature (20 °C to 25 °C) to thereby obtain a first composite in which $Al_2O_3$ particles and $Al_2O_z$ (0 <z<3) particles, which are the reduction product of $Al_2O_3$ particles, were embedded in graphene (Gr).

The amount of graphene contained in the first composite was 30.9 wt%.

**Preparation Example 2: SiO$_2$@Gr first composite**

SiO$_2$ particles (average particle diameter: about 15 nm) were placed in a reactor, and then, CH$_4$ was fed into the reactor at about 300 sccm and 1 atm for about 30 minutes, and the temperature inside the reactor was raised to 1000 °C.

Then, the temperature was maintained for 7 hours to perform the heat treatment. Then, the temperature inside the reactor was adjusted to be room temperature (20 °C to 25 °C) to thereby obtain a first composite in which SiO$_2$ particles and SiO$_y$ (0 <y<3) particles, which are the reduction product of SiO$_2$ particles, were embedded in graphene.

**Confirmation on production of the first composite**

X-ray photoelectron spectroscopy (XPS) spectra of the first composite prepared according to Preparation Example 1 was measured utilizing a Quantum 2000 (Physical Electronics) at a series of time points. The XPS spectra of the C 1s orbital and Al 2p orbital of a sample were measured before the temperature was increased, and 1 minute after, 5 minutes after, 30 minutes after, 1 hour after, and 4 hours after the temperature was increased. In the initial stage after the temperature was raised, only the peak for Al 2p orbital appeared, and the peak for C 1s orbital did not appear. After 30 minutes, the peak for the C 1s orbital appeared clearly, and the size of the peak for Al 2p orbital was significantly reduced.

After 30 minutes, the peak for the C 1s orbital (due to C-C bonding and C=C bonding caused by the growth of graphene) appeared and was clearly observed at around 284.5 eV.

As the reaction time increased (elapsed), the oxidation number of aluminum decreased, and the position of the peak of Al 2p orbital was shifted toward a lower binding energy (eV).

Therefore, it was confirmed that, as the reaction proceeds, graphene grew on the Al$_2$O$_3$ particles, and Al$_2$O$_x$ (a reduction product of Al$_2$O$_3$ (0<x<3) was formed.

The average amount of carbon and aluminum in 10 areas of the first composite sample prepared in Preparation Example 1, was measured through XPS analysis results. With respect to the measurement results, the deviation in the amount of aluminum for each area was calculated. The deviation of the aluminum amount was expressed as a percentage with respect to the average value, and quantifies the degree of uniformity. The percentage deviation of the average aluminum amount (that is, the uniformity of the aluminum amount) was 1%. Therefore, it was confirmed that alumina was substantially uniformly distributed in the first composite prepared in Preparation Example 1.

**Manufacture of composite cathode active material**

**Manufacture Example 1: Al$_2$O$_3$@Gr first composite, 0.25 wt% coating NCA91**

LiNi$_{0.91}$Co$_{0.05}$Al$_{0.04}$O$_2$ (hereinafter referred to as NCA91) and the first composite prepared in Preparation Example 1 were subjected to milling utilizing a Nobilta Mixer (Hosokawa, Japan) at a rotation speed of about 1000 rpm to about 2000 rpm for about 5 minutes to 30 minutes to obtain a composite cathode active material.

The mixing weight ratio of NCA and the first composite obtained according to Preparation Example 1 was 97.5:0.25.

**Manufacture Example 2: Al$_2$O$_3$@Gr first composite, 0.4 wt% coating NCA91**

A composite cathode active material was manufactured in substantially the same manner as in Manufacture Example 1, except that the mixing weight ratio of the first composite obtained according to NCA91 and Preparation Example 1 was changed to 99.6:0.4.

**Manufacture Example 3: Al$_2$O$_3$@Gr first composite, 1.0 wt% coating NCA91**

A composite cathode active material was manufactured in substantially the same manner as in Manufacture Example 1, except that the mixing weight ratio of the first composite obtained according to NCA91 and Preparation Example 1 was changed to 99.0:1.0.

**Manufacture Example 4: SiO$_2$@Gr first composite 0.4 wt% coating NCA91**

A composite cathode active material was manufactured in substantially the same manner as in Manufacture Example 2, except that the SiO$_2$@Gr first composite prepared in Preparation Example 2 was utilized instead of the Al$_2$O$_3$@Gr first composite prepared in Preparation Example 1.

**Confirmation on production of composite cathode active material**

Scanning electron microscopy (SEM), high-resolution transmission electron microscopy (HRTEM), and EDX analysis were performed on the first composite prepared in Preparation Example 1, the composite cathode active material prepared in Manufacture Example 2, and the bare NCA91 of Comparative Manufacturing Example 1. FEI Titan 80-300, which is the product of Philips Inc., was utilized for SEM-EDAX analysis.

The first composite prepared in Preparation Example 1 had such a structure that $Al_2O_3$ particles and $Al_2O_z$ (0 <z<3) particles, which are the reduction product of $Al_2O_3$, were embedded in graphene. It was confirmed that the graphene layer was disposed outside at least one of the $Al_2O_3$ particles and the $Al_2O_z$ particles (0<z<3). At least one of the $Al_2O_3$ particles and/or the $Al_2O_z$ particles (0<z<3) were uniformly dispersed in the graphene matrix. At least one of the $Al_2O_3$ particles and/or the $Al_2O_z$ (0<z<3) particles had a particle diameter of about 15 nm. The particle diameter of the first composite prepared in Preparation Example 1 was about 100 nm to 200 nm.

Regarding the composite cathode active material prepared in Manufacture Example 2, it was confirmed that the shell formed by the first composite containing graphene was disposed on the NCA core.

SEM-EDAX analysis was performed on bare NCA of Comparative Manufacture Example 1 and the composite cathode active material prepared in Manufacture Example 2.

It was confirmed that the concentration of aluminum (Al) distributed on the surface of the composite cathode active material of Manufacture Example 2 was increased compared to the surface of the bare NCA composite cathode active material of Comparative Manufacture Example 1. Therefore, it was confirmed that the first composite prepared in Preparation Example 1 was uniformly coated on the NCA core to form a shell in the composite cathode active material of Manufacture Example 2.

**Manufacture of lithium battery (half-cell)**

**Example 1: Dry cathode, thin film current collector/carbon layer/dry active** material layer **Preparation of cathode**

$LiNi_{0.91}Co_{0.05}Al_{0.04}O_2$ (hereinafter referred to as NCA91) cathode active material, carbon conductive material (Denka Black), and polytetrafluoroethylene (PTFE) were added in a weight ratio of 92:4:4 to the blade mixer, and then, the resultant mixture was subjected to a first dry mixing at a temperature of 25 °C and a speed of 1000 rpm for 10 minutes, thereby preparing a first mixture in which the active material, the conductive material, and the binder were uniformly mixed. Then, in order to allow the binder to be fibrillated, the first mixture was subjected to a second mixing at a temperature of 25 °C at a speed of 5000 rpm for 20 minutes. A separate solvent was not utilized in the preparation of the first mixture and the second mixture.

The prepared second mixture was put into an extruder and extruded to prepare a sheet-shaped cathode active material layer self-standing film. The pressure at the time of extrusion was 50 MPa.

A cathode current collector formed from an aluminum thin film having a thickness of 13.5 $\mu$m and coated with a carbon layer as an interlayer (interlayer) on both opposite surfaces (e.g., on parallel planar surfaces facing away from each other) of the thin film was prepared.

The carbon layer was prepared by coating with a composition including a carbon conductive material (Denka black) and polyvinylidene fluoride (PVDF), and then drying. The thickness of the carbon layer disposed on one surface of the cathode current collector was about 1 $\mu$m.

A cathode active material layer self-standing film was placed on each of opposite surfaces of the cathode current collector, and was pressed to prepare a dry cathode. The pressure at the time of pressing was 3.0 ton/cm. The thickness of the cathode active material layer disposed on one surface of the cathode current collector of the dry cathode was 90 $\mu$m.

**Manufacture of coin cell**

A coin cell was manufactured utilizing the cathode prepared above, lithium metal as a counter electrode, a PTFE separator, and a solution of 1.3 M $LiPF_6$ dissolved in ethylene carbonate (EC) + ethyl methyl carbonate (EMC) + dimethyl carbonate (DMC) (3:4:3 volume ratio) as an electrolyte.

**Example 2: Dry cathode**

A dry cathode and a coin cell were prepared in substantially the same manner as in Example 1, except that in preparing the mixture, a dry mixing was performed by utilizing a blade mixer at a speed of 1000 rpm for 10 minutes to obtain a first mixture in which the active material, the conductive material, and the binder were uniformly mixed, and then, in order to fibrillate the binder, the additional mixing was performed at a speed of 5000 rpm for 10 minutes to prepare a second mixture.

### Example 3: Dry cathode

A dry cathode and a coin cell were prepared in substantially the same manner as in Example 1, except that in preparing the mixture, a dry mixing was performed by utilizing a blade mixer at a speed of 1000 rpm for 10 minutes to obtain a first mixture in which the active material, the conductive material, and the binder were uniformly mixed, and then, in order to fibrillate the binder, the additional mixing was performed at a speed of 5000 rpm for 30 minutes to prepare a second mixture.

Examples 4 to 7: Dry cathode, first composite coated composite cathode active material

A dry cathode and a coin cell were manufactured in substantially the same manner as in Example 1, except that each of the composite cathode active materials prepared in Manufacture Examples 1 to 4 was utilized as the cathode active material.

### Example 8: Dry cathode, mesh current collector

A dry cathode and a coin cell were manufactured in substantially the same manner as in Example 1, except that as a cathode current collector, an aluminum mesh sheet was utilized instead of an aluminum foil.

### Comparative Example 1: Wet cathode, thick-film current collector/wet active material layer

### Preparation of cathode

$LiNi_{0.91}Co_{0.05}Al_{0.04}O_2$ cathode active material, carbon conductive material (Denka Black), and polyvinylidene fluoride (PVdF) were mixed at a weight ratio of 92:4:4 with N-methylpyrrolidone (NMP) in an agate mortar to prepare a slurry.
The slurry was bar-coated on one surface of an aluminum current collector having a thickness of 15 $\mu$m, dried at room temperature, and dried again under vacuum at a temperature of 120 °C to introduce a cathode active material layer.
Then, a cathode active material layer was introduced on the other surface of the aluminum current collector in substantially the same manner to prepare a laminate. The prepared laminate was pressed to complete the manufacture of a cathode. The pressure at the time of pressing was 4.0 ton/cm.

### Manufacture of coin cell

A coin cell was prepared in substantially the same manner as in Example 1, except that the cathode prepared above was utilized.

### Comparative Example 2: Dry cathode, thin film current collector/dry active material layer (free of interlayer)

A dry cathode was manufactured in substantially the same manner as in Example 1, except that an aluminum thin film having a thickness of 10 $\mu$m, which was not coated with a carbon layer, was utilized as a cathode current collector.
Because a part of the cathode active material layer was peeled off from the cathode current collector in the manufactured cathode, it was impossible to manufacture a coin cell.

### Comparative Example 3: Dry cathode

A dry cathode and a coin cell were prepared in substantially the same manner as in Example 1, except that in preparing the mixture, a dry mixing was performed by utilizing a blade mixer at a speed of 1000 rpm for 10 minutes to obtain a first mixture in which the active material, the conductive material, and the binder were uniformly mixed, and then, in order to fibrillate the binder, the additional mixing was performed at a speed of 3000 rpm for 20 minutes to prepare a second mixture.

### Evaluation Example 1: Evaluation of the vertical force of the cathode active material layer (I)

The binding characteristics of the cathode active material layer included in the cathodes prepared in Examples 1 to 8 and Comparative Examples 1 to 3 were analyzed by utilizing SAICAS (SAICAS EN-EX, Daipla Wintes, JAPAN).

The vertical force ($F_V$) according to depth (e.g., along a depth profile) was measured by performing a constant speed analysis by utilizing a diamond blade with a width of 1 mm under conditions including a clearance angle of 10°, a rake angle of 20°, a shearing angle of 45°, a horizontal velocity of 4 $\mu$m/s, and a vertical velocity of 0.4 $\mu$m/s.

First, a first constant velocity analysis was performed from a first position on the surface of the cathode active material layer to the surface of the cathode current collector, and the blade was moved horizontally along the surface of the cathode current collector to remove the cathode active material layer. Then, at a position 10 $\mu$m backward from the first position, a second constant velocity analysis was performed under the same conditions as the first constant velocity analysis. The data measured during the second constant velocity analysis were utilized.

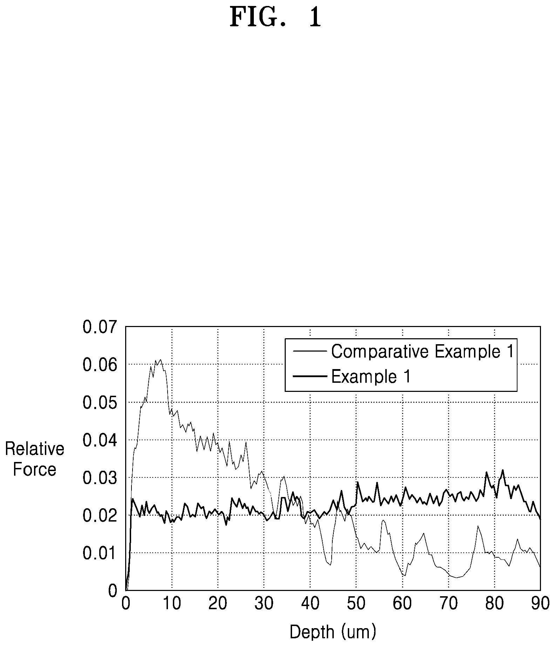

The vertical force of (e.g., applied to) the cathode active material layer was measured, and the measured data were normalized with respect to the force graph area to derive the vertical relative force ($F_{VR}$) of the cathode active material layer. The derived results are shown in FIG. 1.

The vertical force of the cathode active material layer was obtained utilizing data measured along the section starting from the first point, which is 5% away from the surface of the cathode active material layer, and ending at the second point, which is 5% away from the surface of the electrode current collector, with respect to the total thickness of the cathode active material layer. For example, data near the surface of the cathode active material layer and data near the surface of the electrode current collector were excluded to prevent or reduce measurement errors.

From the derived vertical relative force ($F_{VR}$) data of the cathode active material layer, the rate of change of vertical relative force ($F_{VR}$) was calculated utilizing Equation 1. In addition, the arithmetic mean value was calculated from the derived vertical relative force ($F_{VR}$) data of the cathode active material layer.

Ratio of change of vertical relative force ($F_{VR}$) = [(maximum value of vertical relative force - minimum value of vertical relative force)/minimum value of vertical relative force] $\times$ 100      Equation 1

**Table 1**

|  | Ratio of change of vertical relative force[%] |
| --- | --- |
| Comparative Example 1 | 1718 |
| Comparative Example 2 | - |
| Comparative Example 3 | 450 |
| Example 1 | 82.5 |
| Example 2 | 120 |
| Example 3 | 110.5 |

As shown in Table 1, the ratio of change of the vertical relative force of the cathode active material layer included in the cathodes of Examples 1 to 3 was 300% or less.

As shown in FIG. 1, in the case of the cathode active material layer included in the cathode of Example 1, the difference in the binding force was insignificant according to the thickness direction. Therefore, it was confirmed that the cathode active material layer had a substantially uniform binding force and composition distribution regardless of the position along the thickness direction.

In contrast, in the case of the cathode active material layers included in the cathodes of Comparative Examples 1 and 3, the ratio of change of the vertical relative force exceeded 300%.

As shown in FIG. 1, in the case of the cathode active material layer included in the cathode of Comparative Example 1, the difference in the binding force was significant according to the thickness direction. Therefore, it was confirmed that the composition and the binding force were significantly changed according to the location of the cathode active material layer in the thickness direction (e.g., depth) thereof.

The cathode of Comparative Example 2 was not able to be evaluated because a part of the cathode active material layer was peeled off from the cathode current collector before the vertical relative force evaluation.

In the case of the cathode of Comparative Example 3, the binder was not sufficiently fibrillated. Accordingly, it can be seen that the difference in binding force according to the thickness direction of the cathode active material layer was increased.

**Evaluation Example 2: Evaluation of the horizontal force of the cathode active material layer (II)**

The binding characteristics of the cathode active material layer included in the cathodes prepared in Examples 1 to 8 and Comparative Examples 1 to 3 were analyzed by utilizing SAICAS (SAICAS EN-EX, Daipla Wintes, JAPAN).

The horizontal force ($F_H$) according to depth was measured by performing a constant speed analysis by utilizing a diamond blade with a width of 1 mm under conditions including a clearance angle of 10°, a rake angle of 20°, a shear angle of 45°, a horizontal velocity of 4 $\mu$m/s, and a vertical velocity of 0.4 $\mu$m/s.

First, a first constant velocity analysis was performed from a first position on the surface of the cathode active material layer to the surface of the cathode current collector, and the blade was moved horizontally along the surface of the cathode current collector to remove the cathode active material layer. Then, at a position 10 $\mu$m backward from the first position, a second constant velocity analysis was performed under the same conditions as the first constant velocity analysis. The data measured by the second constant velocity analysis were utilized.

With respect to the total thickness of the cathode active material layer, the first horizontal force ($F_{H1}$) at the first point, which is 10% away from the surface of the cathode active material layer, and the second horizontal force ($F_{H2}$) at the second point, which is 10% away from the surface of the cathode current collector, were measured.

Some of the horizontal force evaluation results are shown in Table 2. The horizontal force ratio of the first point to the second point is defined by Equation 2:

## Equation 2

Horizontal force ratio of 1st point to 2nd point (%) = $[F_{H2}/F_{H1}]\times100$

**Table 2**

|  | Horizontal relative binding force ratio [%] |
|---|---|
| Comparative Example 1 | 45 |
| Example 1 | 75 |

As shown in Table 2, the horizontal force ratio of the cathode active material layer of Example 1 was increased compared to that of the cathode active material layer of Comparative Example 1.

Therefore, it was confirmed that the cathode active material layer of Example 1 had a more substantially uniform binding force and composition distribution compared to the cathode active material layer of Comparative Example 1.

**Evaluation Example 3: Surface roughness evaluation of cathode current collector**

The cathodes prepared in Examples 1 to 8 and Comparative Example 1 were analyzed by utilizing a scanning electron microscope, and the roughness of the surface of the cathode current collector was measured from the cross-sectional image utilizing software.

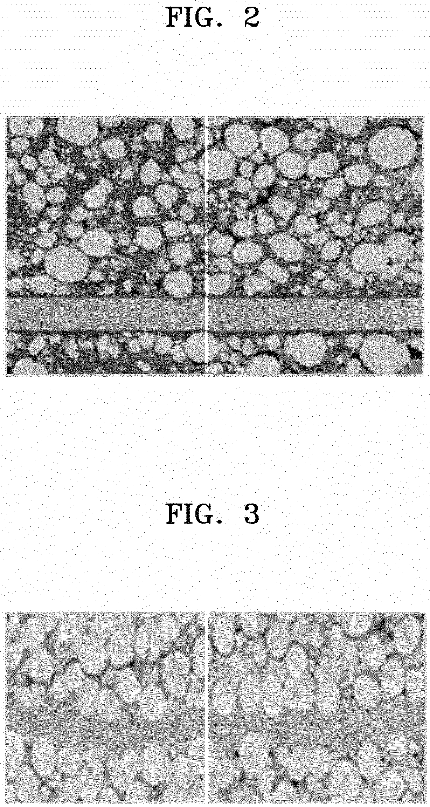

Some of the measurement results are shown in FIGS. 2 to 3 and Table 3.

**Table 3**

|  | $R_q$ [$\mu$m] | $R_a$ [$\mu$m] | $R_{max}$ [$\mu$m] |
|---|---|---|---|
| Comparative Example 1 | more than 2.5 | more than 2.5 | more than 4 |
| Example 1 | less than 1 | less than 1 | less than 1 |

As shown in Table 3 and FIG. 3, the surface of the cathode current collector included in the wet cathode prepared in Comparative Example 1 exhibited an $R_{max}$ of greater than 4 $\mu$m, an $R_a$ of greater than 2.5 $\mu$m, and an $R_q$ of greater than 2.5 $\mu$m.

In the case of the wet cathode of Comparative Example 1, it was confirmed that irregularities were formed on the surface of the cathode current collector due to the penetration of the particles of the cathode active material into the cathode current collector caused by the increased press pressure.

As shown in Table 3 and FIG. 2, the surface of the cathode current collector included in the dry cathode prepared in Example 1 exhibited reduced surface roughness.

In the case of the dry cathode of Example 1, because the penetration of the particles of the cathode active material into the cathode current collector due to the reduced press pressure did not occur, comparatively fewer irregularities were formed on the surface of the cathode current collector.

In the case of the dry cathode of Example 1, although the thin-film current collector was utilized, the thin-film current collector did not crack.

**Evaluation Example 4: Peel strength evaluation**

In relation to the cathodes prepared according to Examples 1 to 8 and Comparative Example 1, a cathode was cut to a size of 25 mm×150 mm and fixed onto the center of a 30 mm×200 mm slide glass by utilizing tape, and then, the current collector was peeled from the cathode active material layer by utilizing a UTM to measure a 90-degree peel strength. Some of the measurement results are shown in Table 4:

**Table 4**

|  | Peel strength [gf/mm] |
|---|---|
| Comparative Example 1 | 3 |
| Example 1 | 1 |

As shown in Table 4, the cathode of Example 1 showed a binding force of 1 gf/mm. Therefore, the cathode of Example 1 showed high binding force despite the low surface roughness of surface of the cathode current collector as shown in Evaluation Example 3.

The cathode of Comparative Example 1 also showed an excellent or suitable binding force, but as shown in Evaluation Example 3, this binding force was due to the high surface roughness of the surface of the cathode current collector.

The cathode of Comparative Example 2 was not able to be evaluated because a part of the cathode active material layer was peeled off from the cathode current collector before the peel strength evaluation.

**Evaluation Example 5: Room temperature charge/discharge characteristic evaluation**

The lithium batteries prepared in Examples 1 to 8 and Comparative Examples 1 to 3 were charged with a constant current of 0.1C rate at 25° C until a voltage reached 4.4 V (vs. Li), and then cut-off was performed at a current of 0.05C rate while maintaining 4.4 V in a constant voltage mode. Subsequently, during discharging, the lithium batteries were discharged with a constant current of 0.1C rate until the voltage reached 2.8 V (vs. Li) (formation cycle).

After the formation cycle, the lithium batteries were charged with a constant current of 0.5C rate at 25° C until the voltage reached 4.4 V (vs. Li). Subsequently, during discharge, the discharge was performed at a constant current of 0.5C rate until the voltage reached 2.8 V (vs. Li), and this cycle was repeated under the same conditions up to 100th cycle (repeated 100 times).

In all charge/discharge cycles, a pause time was provided for 10 minutes after one charge/discharge cycle. Some of the room temperature charge and discharge test results are shown in Table 5. The capacity retention ratio in the 100th cycle is defined by Equation 1:

Capacity retention ratio [%] = [Discharge capacity in 100th cycle/discharge capacity in 1st cycle] $\times$ 100          Equation 1

**Table 5**

|  | Capacity retention ratio [%] |
|---|---|
| Example 1: Carbon layer dry cathode | 90.2 |
| Example 2: Carbon layer dry cathode | 89.5 |
| Example 3: Carbon layer dry cathode | 89.2 |
| Example 4: Carbon layer dry cathode | 92.9 |
| Example 5: Carbon layer dry cathode | 93.5 |
| Example 6: Carbon layer dry cathode | 91.9 |
| Example 7: Carbon layer dry cathode | 91.2 |
| Example 8: Carbon layer dry cathode, mesh current collector | 88.5 |
| Comparative Example 1: Wet cathode | 73 |

(continued)

|  | Capacity retention ratio [%] |
|---|---|
| Comparative Example 3: Carbon layer dry cathode | 79 |

As shown in Table 1, the lithium batteries of Examples 1 to 8 have improved roomtemperature lifespan characteristics compared to the lithium batteries of Comparative Examples 1 and 3.

Accordingly, the lithium batteries of Examples 4 to 6 exhibited improved lifespan characteristics compared to Example 1, and also exhibited improved lifespan characteristics compared to Example 7.

The lithium battery of Comparative Example 3 showed poor lifespan characteristics due to the increase in the difference in the binding force of the binder according to the thickness-direction position of the cathode active material layer.

Because the electrode has a substantially uniform distribution of components, cycle life characteristics of a lithium battery including the electrode are improved.

Terms such as "substantially," "about," and "~" are used as terms of approximation and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that various changes in form and details may be made therein without departing from the scope of the invention as defined by the following claims.

**Claims**

1. A method of manufacturing an electrode, the method comprising:

    preparing a mixture by dry mixing an electrode active material, a dry conductive material, and a dry binder;
    subjecting the mixture to a fibrillizing process until the binder has an aspect ratio of 10 or more as determined by inspection of a cross section of the electrode with a scanning electron microscope;
    providing an electrode current collector (200) with an interlayer (250) on one surface or on both opposite surfaces thereof; and
    placing the electrode active material on the one surface or on both the opposite surfaces of the electrode current collector (200) by arranging and pressing the mixture on the one surface or on both the opposite surfaces of the electrode current collector to form an electrode active material layer (100),
    wherein the interlayer (250) comprises a binder, and
    when the electrode active material layer (100) is measured by a surface and interfacial cutting analysis system, a ratio of change of a vertical relative force (FVR) between a first point, which is 5% away from the surface of the electrode active material layer (100) facing away from the electrode current collector (200), and a second point, which is 5% away from the surface of the electrode current collector (200), with respect to the total thickness of the electrode active material layer (100), is 200% or less.

2. The method of claim 1, wherein the providing of the electrode current collector (200) with the interlayer (250) on the one surface or on the both opposite surfaces thereof comprises:

    providing the electrode current collector (200); and
    arranging the interlayer (250) on the one surface or on both the opposite surfaces of the electrode current collector (200).

3. The method of claim 1 or claim 2, wherein the fibrillizing process is a second dry mixing process, performed at a temperature of 25°C to 65 °C, at a rotation speed of 4000 rpm or more, and for 10 minutes or more.

4. The method of claim 3, wherein the second dry mixing process is performed at a rotation speed of 4000 rpm to 9000 rpm for 10 minutes to 60 minutes.

5. The method of any one preceding claim, wherein a maximum roughness (Rmax) of the surface of the electrode current collector (200) is 3 $\mu$m or less,
a mean roughness (Ra) of the surface of the electrode current collector (200) is 2 $\mu$m or less, and a root mean square roughness (RMS) Rq of the surface of the electrode current collector (200) is 2 $\mu$m or less.

6. The method of any one preceding claim, wherein the binder comprises a fluorine-based binder.

7. The method of any one preceding claim, wherein the dry conductive material comprises a carbon-based conductive material.

**Patentansprüche**

1. Verfahren zur Herstellung einer Elektrode, wobei das Verfahren Folgendes umfasst:

Zubereiten einer Mischung durch trockenes Mischen eines aktiven Elektrodenmaterials, eines trockenen leitfähigen Materials und eines trockenen Bindemittels;
einem Fibrillierungsprozess, Unterziehen der Mischung, bis das Bindemittel eine Streckung von 10 oder mehr aufweist, was durch Untersuchung eines Querschnitts der Elektrode mit einem Rasterelektronenmikroskop bestimmt wird;
Bereitstellen eines Elektrodenstromkollektors (200) mit einer Zwischenschicht (250) auf einer Oberfläche oder auf beiden gegenüberliegenden Oberflächen desselben; und
Platzieren des aktiven Elektrodenmaterials auf der einen Oberfläche oder auf den beiden gegenüberliegenden Oberflächen des Elektrodenstromkollektors (200) durch Anordnen und Andrücken der Mischung auf die eine Oberfläche oder auf die beiden gegenüberliegenden Oberflächen des Elektrodenstromkollektors, um eine Schicht von aktivem Elektrodenmaterial (100) auszubilden,
wobei die Zwischenschicht (250) ein Bindemittel umfasst, und
wenn die Schicht von aktivem Elektrodenmaterial (100) durch ein Oberflächen- und Grenzflächen-Schneidanalysesystem vermessen wird, ein Verhältnis der Änderung einer vertikalen Relativkraft (FVR) zwischen einem ersten Punkt, der 5 % von der Oberfläche der Schicht von aktivem Elektrodenmaterial (100), die vom Elektrodenstromkollektor (200) abgewandt ist, entfernt ist, und einem zweiten Punkt, der 5 % von der Oberfläche des Elektrodenstromkollektors (200) in Bezug auf die Gesamtdicke der Schicht von aktivem Elektrodenmaterial (100) entfernt ist, 200 % oder weniger beträgt.

2. Verfahren nach Anspruch 1, wobei das Bereitstellen eines Elektrodenstromkollektors (200) mit einer Zwischenschicht (250) auf einer Oberfläche oder auf beiden gegenüberliegenden Oberflächen desselben Folgendes umfasst:

Bereitstellen des Elektrodenstromkollektors (200); und
Anordnen der Zwischenschicht (250) auf der einen Oberfläche oder auf den beiden gegenüberliegenden Oberflächen des Elektrodenstromkollektors (200).

3. Verfahren nach Anspruch 1 oder 2, wobei der Fibrillierungsprozess ein zweiter Trockenmischprozess ist, der bei einer Temperatur von 25 °C bis 65 °C, bei einer Drehzahl von 4000 U/min oder mehr und für 10 Minuten oder mehr durchgeführt wird.

4. Verfahren nach Anspruch 3, wobei der zweite Trockenmischprozess bei einer Drehzahl von 4000 bis 9000 U/min für 10 Minuten bis 60 Minuten durchgeführt wird.

5. Verfahren nach einem der vorstehenden Ansprüche, wobei eine maximale Rauheit (Rmax) der Oberfläche des Elektrodenstromkollektors (200) 3 $\mu$m oder weniger beträgt,

eine mittlere Rauheit (Ra) der Oberfläche des Elektrodenstromkollektors (200) 2 $\mu$m oder weniger beträgt, und

ein quadratisches Mittel (RMS) der Rauheit Rq der Oberfläche des Elektrodenstromkollektors (200) 2 $\mu$m oder weniger beträgt.

**6.** Verfahren nach einem der vorstehenden Ansprüche, wobei das Bindemittel ein fluorhaltiges Bindemittel umfasst.

**7.** Verfahren nach einem der vorstehenden Ansprüche, wobei das trockene leitfähige Material ein leitfähiges Material auf Kohlenstoffbasis umfasst.

**Revendications**

**1.** Procédé de fabrication d'une électrode, le procédé comprenant :

la préparation d'un mélange en mélangeant à sec un matériau actif d'électrode, un matériau conducteur sec et un liant sec ;
la soumission du mélange à un processus de fibrillisation jusqu'à ce que le liant présente un rapport d'aspect de 10 ou plus, déterminé par l'inspection d'une section transversale de l'électrode au microscope électronique à balayage ;
la fourniture d'une couche intermédiaire (250) sur une surface ou sur les deux surfaces opposées d'un collecteur de courant d'électrode (200) ; et
le placement du matériau actif d'électrode sur la surface ou sur les deux surfaces opposées du collecteur de courant d'électrode (200) en agençant et en pressant le mélange sur la surface ou sur les deux surfaces opposées du collecteur de courant d'électrode pour former une couche de matériau actif d'électrode (100), dans lequel la couche intermédiaire (250) comprend un liant, et
lorsque la couche de matériau actif d'électrode (100) est mesurée par un système d'analyse de coupe de surface et d'interface, un rapport de variation d'une force relative verticale (FVR) entre un premier point, qui est à 5 % de la surface de la couche de matériau actif d'électrode (100) opposée au collecteur de courant d'électrode (200), et un second point, qui est à 5 % de la surface du collecteur de courant d'électrode (200), par rapport à l'épaisseur totale de la couche de matériau actif d'électrode (100), est de 200 % ou moins.

**2.** Procédé selon la revendication 1, dans lequel la fourniture de la couche intermédiaire (250) sur la surface ou sur les deux surfaces opposées du collecteur de courant d'électrode (200) comprend :

la fourniture du collecteur de courant d'électrode (200) ; et
l'agencement de la couche intermédiaire (250) sur la surface ou sur les deux surfaces opposées du collecteur de courant d'électrode (200).

**3.** Procédé selon la revendication 1 ou la revendication 2, dans lequel le processus de fibrillisation est un second processus de mélange à sec, effectué à une température de 25 °C à 65 °C, à une vitesse de rotation de 4 000 tr/min ou plus, et pendant 10 minutes ou plus.

**4.** Procédé selon la revendication 3, dans lequel le second processus de mélange à sec est effectué à une vitesse de rotation de 4 000 à 9 000 tr/min pendant 10 minutes à 60 minutes.

**5.** Procédé selon une quelconque revendication précédente, dans lequel une rugosité maximale (Rmax) de la surface du collecteur de courant d'électrode (200) est de 3 $\mu$m ou moins,

une rugosité moyenne (Ra) de la surface du collecteur de courant d'électrode (200) est de 2 $\mu$m ou moins, et
la rugosité moyenne quadratique (RMS) Rq de la surface du collecteur de courant d'électrode (200) est de 2 $\mu$m ou moins.

**6.** Procédé selon une quelconque revendication précédente, dans lequel le liant comprend un liant à base de fluor.

**7.** Procédé selon une quelconque revendication précédente, dans lequel le matériau conducteur sec comprend un matériau conducteur à base de carbone.

# FIG. 1

FIG. 2

FIG. 3

## FIG. 4

```
────────────────────────── ─ 100 ┐
────────────────────────── ─ 250 │
────────────────────────── ─ 200 ├ 300
────────────────────────── ─ 250 │
────────────────────────── ─ 100 ┘
```

## FIG. 5

```
────────────────────────── ─ 100 ┐
────────────────────────── ─ 250 ├ 300
────────────────────────── ─ 200 ┘
```

# FIG. 6

# FIG. 7A

# FIG. 7B

# FIG. 7C

# FIG. 7D

EP 4 024 498 B1

# FIG. 7E

# FIG. 7F

# FIG. 8

# FIG. 9

FIG. 10

# FIG. 11

# FIG. 12

**EP 4 024 498 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200028156 A
- WO 2017197299 A
- US 2020227723 A